# EUROPEAN PATENT APPLICATION

(11) **EP 4 387 367 A1**
(43) Date of publication of application: **19.06.2024**
(21) Application number: 22882617.8
(22) Date of filing: 29.09.2022
(51) Int. Cl.: H04W 74/00

(54) **RANDOM ACCESS METHOD AND APPARATUS**

(30) Priority: 18.10.2021 CN 202111209169
(71) Applicant: Huawei Technologies Co., Ltd., Shenzhen, Guangdong 518129 (CN)
(72) Inventor: LI, Jiaojiao, Shenzhen, Guangdong 518129 (CN); CHANG, Junren, Shenzhen, Guangdong 518129 (CN); LIU, Nannan, Shenzhen, Guangdong 518129 (CN); LIU, Jianghua, Shenzhen, Guangdong 518129 (CN)
(74) Representative: Pfenning, Meinig & Partner mbB
(86) International application number: PCT/CN2022/122671
(87) International publication number: WO 2023/066006

(57) **Abstract**

A random access method and an apparatus are disclosed, to resolve a problem that a terminal device cannot access a network due to a reason like network upgrade. The method is as follows: The terminal device receives an SSB; the terminal device determines a frequency domain position of a random access occasion based on a frequency domain position of the SSB; and the terminal device initiates random access based on the random access occasion, where the random access occasion includes a frequency domain resource determined based on the frequency domain position of the random access occasion. The terminal device determines the frequency domain position of the random access occasion based on the frequency domain position of the SSB. In this way, during the network upgrade, without receiving and decoding an SIB 1, the terminal device can determine the frequency domain position of the random access occasion, initiate the random access, and successfully access the network or a cell.

## Description

### CROSS-REFERENCE TO RELATED APPLICATIONS

This application claims priority to Chinese Patent Application No. 202111209169.4, filed with the China National Intellectual Property Administration on October 18, 2021 and entitled "RANDOM ACCESS METHOD AND APPARATUS", which is incorporated herein by reference in its entirety.

### TECHNICAL FIELD

Embodiments of this application relate to the field of communication technologies, and in particular, relate to a random access method and an apparatus.

### BACKGROUND

In an existing 5th generation (5th generation, 5G) new radio (new radio, NR) communication system, a network device sends a synchronization signal and physical broadcast channel block (SS/PBCH block, SSB) in a beam sweeping manner. A terminal device receives the SSB from the network device, where the SSB carries some configuration information. The configuration information includes scheduling information of some system information, and the system information may be, for example, a system information block 1 (system information block 1, SIB 1). The terminal device determines, based on the configuration information in the SSB, to receive the system information, for example, to receive the SIB 1. The SIB 1 includes a basic configuration parameter of a cell that the terminal device camps on and accesses, for example, configuration information of an initial bandwidth part (bandwidth part, BWP) and configuration information of a physical random access channel (physical random access channel, PRACH). Therefore, the terminal device needs to access the cell based on the SIB 1 message.

With network upgrade, configuration parameters of protocol versions or a configuration parameter of a new feature supported by the version are added to the SIB 1. A protocol change may bring a compatibility problem, causing implementation inconsistency between the terminal device and a network, or causing an implementation error between the terminal device and the network, and further resulting in that the terminal device cannot access the network. Especially for a terminal device in an internet of things scenario, an online periodicity of the terminal device is long, and an environment in which the terminal device is located makes it difficult to upgrade the terminal device, which severely affects access performance of the terminal device.

### SUMMARY

Embodiments of this application provide a random access method and an apparatus, to resolve a problem that a terminal device cannot access a network due to a reason like network upgrade.

According to a first aspect, a random access method is provided. The method may be performed by a terminal device or may be performed by a component of the terminal device. The following provides descriptions by using an example in which the method is performed by the terminal device. The method may be implemented in the following steps: The terminal device receives a synchronization signal and physical broadcast channel block SSB; the terminal device determines a frequency domain position of a random access occasion based on a frequency domain position of the SSB; and the terminal device initiates random access based on the random access occasion, where the random access occasion includes a frequency domain resource determined based on the frequency domain position of the random access occasion. The terminal device determines the frequency domain position of the random access occasion based on the frequency domain position of the SSB. In this way, during network upgrade, without receiving and decoding an SIB 1, the terminal device can determine the frequency domain position of the random access occasion, initiate the random access, and successfully access the network or a cell.

Determining the frequency domain position of the random access occasion based on the frequency domain position of the SSB may be implemented in the following manners:

Manner 1: A spacing between the frequency domain position of the random access occasion and the frequency domain position of the SSB is a first quantity of frequency domain units; and the frequency domain position of the random access occasion includes any one of the following: a frequency domain starting position of the random access occasion, a frequency domain ending position of the random access occasion, or a center frequency of the random access occasion; and the frequency domain position of the SSB includes any one of the following: a frequency domain starting position of the SSB, a frequency domain ending position of the SSB, or a center frequency of the SSB. When an uplink carrier bandwidth (an uplink channel bandwidth) is equal to a downlink carrier bandwidth (a downlink channel bandwidth), the frequency domain position of the random access occasion on an uplink carrier may be correspondingly determined based on the SSB on a downlink carrier. In this case, the terminal device does not need any prior information of the uplink carrier.

Manner 2: A center frequency of the random access occasion is equal to a center frequency of the SSB. When an uplink carrier bandwidth (an uplink channel bandwidth) is equal to a downlink carrier bandwidth (a downlink channel bandwidth), the frequency domain position of the random access occasion on an uplink carrier may be correspondingly determined based on the SSB on a downlink carrier. In this case, the terminal device does not need any prior information of the uplink carrier.

On the basis that the center frequency of the random access occasion is equal to the center frequency of the SSB, optionally, the random access occasion is located in last Y symbols of a first half-frame, Y is a positive integer, the first half-frame is a half-frame in which the SSB is located, or the first half-frame is an N^{th} half-frame after a half-frame in which the SSB is located, and N is a positive integer. Because the random access occasion is an uplink resource, and the SSB resource is a downlink resource, the random access occasion is designed to be located in the last Y symbols of the first half-frame. This can ensure that the random access occasion and the SSB resource do not overlap in time domain.

Optionally, both Manner 1 and Manner 2 may be applicable to a time division duplex (time division duplex, TDD) duplex mode, that is, a duplex mode of a band on which the SSB and the random access occasion are located is the TDD.

Manner 3: A center frequency of the random access occasion is determined based on a center frequency of the SSB and a preset frequency separation. For example, a difference between the center frequency of the random access occasion and the center frequency of the SSB is the preset frequency separation. Optionally, Manner 3 may be applicable to a frequency division duplex (frequency division duplex, FDD) duplex mode, that is, a duplex mode of a band on which the SSB and the random access occasion are located is the FDD, and an uplink channel bandwidth and a downlink channel bandwidth of the band on which the SSB and the random access occasion are located are equal. In the FDD duplex mode, the difference between the center frequency of the random access occasion and the center frequency of the SSB is a carrier center frequency separation from a transmit end (transmit end, TX) channel to a receive end (receive end, RX) channel. Because the uplink channel bandwidth is equal to the downlink channel bandwidth, it can be ensured that the center frequency of a random access occasion is within an uplink carrier range.

On the basis of Manner 3, when an operating band of a cell in which the random access is initiated is n24, the terminal device determines, based on prior information, one or two of two preset frequency separations corresponding to n24, and determines the center frequency of the random access occasion based on the determined preset frequency separation.

In a possible design, the random access occasion includes a second quantity of frequency domain units in frequency domain.

In a possible design, a subcarrier spacing of the random access occasion is a subcarrier spacing of the SSB, or a subcarrier spacing of the random access occasion is a subcarrier spacing indicated by a master information block (master information block, MIB) corresponding to the SSB.

In a possible design, a time domain periodicity of the random access occasion is determined based on an initial access periodicity of the SSB.

According to a second aspect, a random access method is provided. The method may be performed by a terminal device or may be performed by a component of the terminal device. The following provides descriptions by using an example in which the method is performed by the terminal device. The method may be implemented in the following steps: The terminal device determines a frequency domain position of a random access occasion, where the frequency domain position of the random access occasion is within a first frequency range, a starting position of the first frequency range is 1457 MHz, and an ending position of the first frequency range is 1492 MHz; and the terminal device initiates random access based on the random access occasion. The method may be applicable to a communication scenario in which an uplink channel bandwidth and a downlink channel bandwidth of the terminal device are asymmetric, the first frequency range is set between 1457 MHz and 1492 MHz, and the frequency domain position of the random access occasion should be set within the first frequency range, to ensure that the frequency domain position of the random access occasion is within the uplink channel bandwidth.

In a possible design, the terminal device determines that an uplink channel bandwidth of a cell is not equal to a downlink channel bandwidth of the cell.

In a possible design, the frequency domain position of the random access occasion includes any one of the following: a frequency domain starting position of the random access occasion, a frequency domain ending position of the random access occasion, or a center frequency of the random access occasion.

In a possible design, the random access occasion is located in last Y symbols of a half-frame in which an SSB is located, and Y is a positive integer. Because the random access occasion is an uplink resource, and the SSB resource is a downlink resource, the random access occasion is designed to be located in the last Y symbols of the first half-frame. This can ensure that the random access occasion and the SSB resource do not overlap in time domain.

According to a third aspect, a random access method is provided. The method may be performed by a terminal device or may be performed by a component of the terminal device. The following provides descriptions by using an example in which the method is performed by the terminal device. The method may be implemented in the following steps: A terminal device determines a frequency domain position of a random access occasion based on a frequency of an uplink carrier of a cell and a first offset value; and the terminal device initiates random access based on the random access occasion. For a specific band, for example, a band n66/70/71/91/92/93/94, bandwidths of an uplink carrier and a downlink carrier of the band n66/70/71/91/92/93/94 may alternatively be asymmetric. The method according to the third aspect may be applicable to this scenario and certainly may also be applicable to any other scenario. The terminal device may determine the frequency of the uplink carrier of the cell based on prior information and further determine the frequency domain position of the random access occasion. In this way, during network upgrade, without receiving and decoding an SIB 1, the terminal device can determine the frequency domain position of the random access occasion, initiate the random access, and successfully access the network or the cell.

In a possible design, the frequency domain position of the random access occasion includes any one of the following: a frequency domain starting position of the random access occasion, a frequency domain ending position of the random access occasion, or a center frequency of the random access occasion, and the frequency of the uplink carrier includes any one of the following: a lowest frequency, a center frequency, or a highest frequency of the uplink carrier.

In a possible design, the center frequency of the random access occasion is a sum of the frequency of the uplink carrier and the first offset value.

In a possible design, an uplink channel bandwidth and a downlink channel bandwidth of the cell in which the random access is initiated are not equal.

Based on the first aspect, the second aspect, or the third aspect, the following provides some possible designs.

In a possible design, the random access occasion further includes a time domain resource; that the terminal device initiates random access based on the random access occasion includes: The terminal device sends a random access preamble to a network device based on the time domain resource and the frequency domain resource; and the method further includes: the terminal device receives an RAR from the network device based on a random access response RAR window, where a start point of the RAR window is a P^{th} symbol after a last symbol of the time domain resource, and P is an integer greater than or equal to 0. It is designed that the start point of the RAR window is the P^{th} symbol after the last symbol of the time domain resource. In this way, without receiving and decoding an SIB 1, the terminal device can determine the RAR window, monitor the RAR, and access a network.

In a possible design, the terminal device sends a message 3 to the network device based on an uplink resource grant in the RAR, where the uplink resource grant includes an offset value, the offset value is used to determine a frequency domain starting position of an uplink resource of the message 3, and the offset value is an offset value of the uplink resource that is of the message 3 and that is relative to a frequency domain position of an SSB, or the offset value is an offset value of the uplink resource that is of the message 3 and that is relative to the frequency domain position of the random access occasion. The uplink resource grant is parsed based on the frequency domain position of the SSB or the frequency domain position of the random access occasion. In this way, without receiving and decoding an SIB 1, the terminal device can determine the uplink resource of the message 3, receive the message 3, and access a network.

Optionally, the uplink resource grant further includes a quantity of frequency domain units occupied by the uplink resource of the message 3.

In a possible design, the terminal device sends the message 3 to the network device based on the uplink resource grant in the RAR, where the uplink resource grant indicates the uplink resource of the message 3 in a bandwidth part, and the bandwidth part is determined based on the frequency domain position of the random access occasion. The bandwidth part is determined based on the frequency domain position of the random access occasion, and then the uplink resource grant is determined based on the bandwidth part. Without receiving and decoding an SIB 1, the terminal device can determine the uplink resource of the message 3, receive the message 3, and access a network.

Optionally, the bandwidth part is Z frequency domain units centered on the center frequency of the random access occasion, and Z is a positive integer.

According to a fourth aspect, a communication apparatus is provided. The apparatus may be a terminal device or may be a component located in the terminal device (for example, a chip, a chip system, or a circuit). The apparatus has a function of implementing the method according to any one of the foregoing aspects and the possible designs of any one of the foregoing aspects. The function may be implemented by hardware or may be implemented by executing corresponding software by hardware. The hardware or the software includes one or more modules corresponding to the function. In a design, the apparatus may include a processing unit and a transceiver unit. For example, when the method according to the first aspect and the possible designs of the first aspect are implemented, the transceiver unit is configured to receive an SSB from a network device; and the processing unit is configured to: determine a frequency domain position of a random access occasion based on a frequency domain position of the SSB; and initiate random access based on the random access occasion. When the method according to the second aspect and the possible designs of the second aspect are implemented, the processing unit is configured to determine a frequency domain position of a random access occasion, where the frequency domain position of the random access occasion is within a first frequency range, a starting position of the first frequency range is 1457 MHz, and an ending position of the first frequency range is 1492 MHz; and configured to initiate random access based on the random access occasion. When the method according to the third aspect and the possible designs of the third aspect are implemented, the processing unit is configured to: determine a frequency domain position of a random access occasion based on a frequency of an uplink carrier of a cell and a first offset value; and initiate random access based on the random access occasion.

More detailed descriptions of the processing unit and the transceiver unit may be obtained directly with reference to the related descriptions according to any one of the foregoing aspects. For beneficial effect of the fourth aspect and the possible designs, refer to the descriptions of corresponding parts of the foregoing aspects.

According to a fifth aspect, an embodiment of this application provides a communication apparatus. The communication apparatus includes an interface circuit and a processor, and the processor and the interface circuit are coupled to each other. The processor is configured to implement, by using a logic circuit or executing code instructions, the method according to the foregoing aspects and the possible designs of the aspects. The interface circuit is configured to: receive a signal from a communication apparatus other than the communication apparatus and transmit the signal to the processor, or send a signal from the processor to a communication apparatus other than the communication apparatus. It may be understood that the interface circuit may be a transceiver or an input/output interface.

Optionally, the communication apparatus may further include a memory, configured to: store instructions executed by the processor, or store input data required for running the instructions by the processor or store data generated after the processor runs the instructions. The memory may be a physically independent unit, may be coupled to the processor, or the processor includes the memory.

According to a sixth aspect, an embodiment of this application provides a computer-readable storage medium. The computer-readable storage medium stores a computer program or readable instructions, and when the computer program or the readable instructions are executed by a communication apparatus, the method according to the foregoing aspects or the possible designs of the aspects is performed.

According to a seventh aspect, an embodiment of this application provides a chip system. The chip system includes a processor and may further include a memory. The memory is configured to store a program, instructions, or code. The processor is configured to execute the program, the instructions, or the code stored in the memory, to implement the method according to the foregoing aspects and the possible designs of the aspects. The chip system may include a chip or may include a chip and another discrete component.

According to an eighth aspect, a computer program product including instructions is provided. When the computer program product is executed by a communication apparatus, the method according to the foregoing aspects or the possible designs of the aspects is performed.

### BRIEF DESCRIPTION OF DRAWINGS

FIG. 1 is a schematic diagram of an architecture of a communication system according to an embodiment of this application;
FIG. 2 is a schematic diagram of 5G NR spectrum division according to an embodiment of this application;
FIG. 3a is a schematic diagram of a TDD duplex mode according to an embodiment of this application;
FIG. 3b is a schematic diagram of an FDD duplex mode according to an embodiment of this application;
FIG. 4 is a schematic diagram of TDD uplink and downlink carriers according to an embodiment of this application;
FIG. 5 is a schematic diagram of FDD uplink and downlink carriers according to an embodiment of this application;
FIG. 6 is a first schematic flowchart of a random access method according to an embodiment of this application;
FIG. 7a is a first schematic diagram of a relationship between a frequency domain position of a random access occasion and a frequency domain position of an SSB according to an embodiment of this application;
FIG. 7b is a second schematic diagram of a relationship between a frequency domain position of a random access occasion and a frequency domain position of an SSB according to an embodiment of this application;
FIG. 7c is a third schematic diagram of a relationship between a frequency domain position of a random access occasion and a frequency domain position of an SSB according to an embodiment of this application;
FIG. 7d is a fourth schematic diagram of a relationship between a frequency domain position of a random access occasion and a frequency domain position of an SSB according to an embodiment of this application;
FIG. 8a is a fifth schematic diagram of a relationship between a frequency domain position of a random access occasion and a frequency domain position of an SSB according to an embodiment of this application;
FIG. 8b is a sixth schematic diagram of a relationship between a frequency domain position of a random access occasion and a frequency domain position of an SSB according to an embodiment of this application;
FIG. 8c is a seventh schematic diagram of a relationship between a frequency domain position of a random access occasion and a frequency domain position of an SSB according to an embodiment of this application;
FIG. 9a is an eighth schematic diagram of a relationship between a frequency domain position of a random access occasion and a frequency domain position of an SSB according to an embodiment of this application;
FIG. 9b is a ninth schematic diagram of a relationship between a frequency domain position of a random access occasion and a frequency domain position of an SSB according to an embodiment of this application;
FIG. 9c is a tenth schematic diagram of a relationship between a frequency domain position of a random access occasion and a frequency domain position of an SSB according to an embodiment of this application;
FIG. 10 is a schematic diagram of a frame structure according to an embodiment of this application;
FIG. 11 is a schematic diagram of a random access occasion on an FDD symmetric carrier according to an embodiment of this application;
FIG. 12 is a second schematic flowchart of a random access method according to an embodiment of this application;
FIG. 13 is a schematic diagram of a random access occasion of a band n50 according to an embodiment of this application;
FIG. 14 is a third schematic flowchart of a random access method according to an embodiment of this application;
FIG. 15 is a schematic diagram of determining a center frequency of a random access occasion based on a lowest frequency of an uplink carrier of a cell and a first offset value according to an embodiment of this application;
FIG. 16 is a schematic diagram of a bandwidth part and an uplink resource of a message 3 according to an embodiment of this application;
FIG. 17 is a first schematic diagram of a structure of a communication apparatus according to an embodiment of this application; and
FIG. 18 is a second schematic diagram of a structure of a communication apparatus according to an embodiment of this application.

### DESCRIPTION OF EMBODIMENTS

Embodiments of this application provide a random access method and an apparatus, to successfully access a network when a terminal device cannot decode an SIB 1 message due to a reason like network upgrade. The method and the apparatus are conceived based on a same or similar technical concept. A problem-resolving principle of the method is similar to a problem-resolving principle of the apparatus. Therefore, for implementation of the apparatus and the method, refer to each other. Details of repeated parts are not described.

A communication method provided in embodiments of this application may be applied to a 4th generation (4th generation, 4G) communication system, for example, long term evolution (long term evolution, LTE), may be applied to a 5th generation (5th generation, 5G) communication system, for example, 5G new radio (new radio, NR), or may also be applied to various future evolved communication systems, for example, a 6th generation (6th generation, 6G) communication system or a space-air-sea-ground integrated communication system. It may be understood that the system architecture and the application scenario described in embodiments of this application are intended to describe technical solutions in embodiments of this application more clearly, and do not constitute a limitation on the technical solutions provided in embodiments of this application.

The following describes in detail embodiments of this application with reference to accompanying drawings.

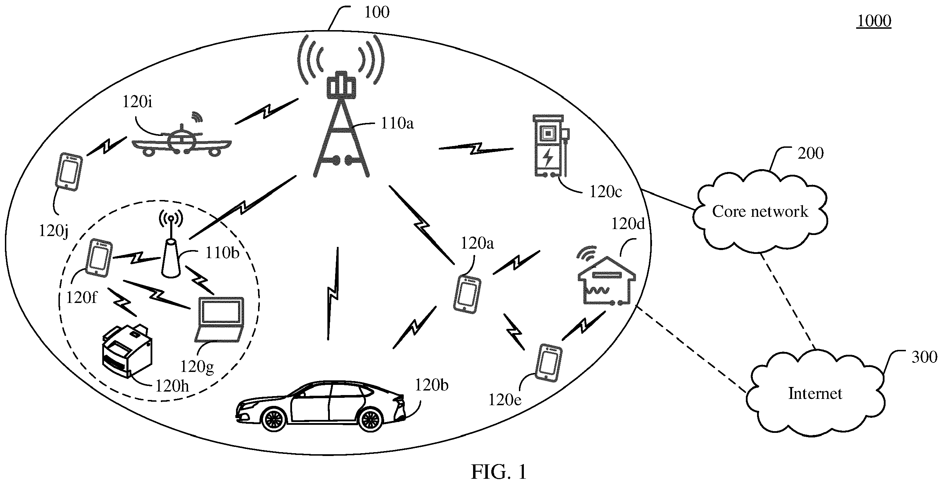

FIG. 1 is a schematic diagram of an architecture of a communication system 1000 to which an embodiment of this application is applied. As shown in FIG. 1, the communication system includes a radio access network 100 and a core network 200. Optionally, the communication system 1000 may further include an internet 300. The radio access network 100 may include at least one radio access network device (for example, 110a and 110b in FIG. 1) and may further include at least one terminal (for example, 120a to 120j in FIG. 1). The terminal is connected to the radio access network device in a wireless manner, and the radio access network device is connected to the core network in a wireless or wired manner. The core network device and the radio access network device may be independent and different physical devices, functions of the core network device and logical functions of the radio access network device are integrated into a same physical device, or some functions of the core network device and some functions of the radio access network device are integrated into one physical device. A wired or wireless manner may be used for connections between terminals and between radio access network devices. FIG. 1 is only a schematic diagram. The communication system may further include another network device, for example, may further include a wireless relay device and a wireless backhaul device, which are not shown in FIG. 1.

The radio access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation NodeB in a 6th generation (6th generation, 6G) mobile communication system, a base station in a future mobile communication system, an access node in a Wi-Fi system, or the like; or may be a module or a unit that implements some functions of the base station, for example, may be a central unit (central unit, CU) or may be a distributed unit (distributed unit, DU). The CU herein completes functions of a radio resource control protocol and a packet data convergence layer protocol (packet data convergence protocol, PDCP) of the base station, and may further complete a function of a service data adaptation protocol (service data adaptation protocol, SDAP). The DU completes functions of a radio link control layer and a medium access control (medium access control, MAC) layer of the base station, and may further complete a function of some or all physical layers. For specific descriptions of the protocol layers, refer to related technical specifications of a 3rd generation partnership project (3rd generation partnership project, 3GPP). The radio access network device may be a macro base station (for example, the 110a in FIG. 1), may be a micro base station or an indoor station (for example, the 110b in FIG. 1), may be a relay node or a donor node, or the like. A specific technology and a specific device form that are used by the radio access network device are not limited in embodiments of this application. For ease of description, the following uses an example in which the base station is used as the radio access network device for description.

The terminal device may also be referred to as a terminal device, user equipment (user equipment, UE), a mobile station, a mobile terminal, or the like. The terminal may be widely applied to various scenarios such as device-to-device (device-to-device, D2D), vehicle-to-everything (vehicle-to-everything, V2X) communication, machine-type communication (machine-type communication, MTC), an internet of things (internet of things, IoT), virtual reality, augmented reality, industrial control, self driving, remote medical, a smart grid, smart furniture, smart office, a smart wearable, smart transportation, and a smart city. The terminal may be a mobile phone, a tablet computer, a computer with a wireless transceiver function, a wearable device, a vehicle, an unmanned aerial vehicle, a helicopter, an airplane, a ship, a robot, a robotic arm, a smart home device, or the like. A specific technology and a specific device form that are used by the terminal are not limited in embodiments of this application.

The base station and the terminal may be fixed or movable. The base station and the terminal may be deployed on land, including an indoor or outdoor device, a handheld device, or a vehicle-mounted device, may be deployed on water, or may be deployed on an airplane, a balloon, or an artificial satellite in the air. Application scenarios of the base station and the terminal are not limited in embodiments of this application.

Roles of the base station and the terminal may be relative. For example, the helicopter or the unmanned aerial vehicle 120i in FIG. 1 may be configured as a mobile base station, and for the terminal 120j accessing the radio access network 100 through the 120i, the terminal 120i is a base station. However, for the base station 110a, the 120i is a terminal, that is, communication between the 110a and the 120i is performed by using a wireless air interface protocol. Certainly, the communication between the 110a and the 120i may alternatively be performed by using an interface protocol between base stations. In this case, the 120i is also a base station relative to the 110a. Therefore, both the base station and the terminal may be collectively referred to as a communication apparatus, the 110a and the 110b in FIG. 1 may be referred to as a communication apparatus having a base station function, and the 120a to the 120j in FIG. 1 may be referred to as a communication apparatus having a terminal function.

In embodiments of this application, the base station function may alternatively be performed by a module (for example, a chip) in the base station or may be performed by a control subsystem including the base station function. The control subsystem including the base station function may be a control center in the application scenarios such as the smart grid, the industrial control, the smart transportation, and the smart city. The terminal function may alternatively be performed by a module (for example, a chip or a modem) in the terminal or may be performed by an apparatus including the terminal function. When a specific communication method is described in this application, an example in which the device implementing the base station function is the network device is used for description, and an example in which the device implementing the terminal function is the terminal device is used for description.

The foregoing content describes a system architecture and possible application scenarios of embodiments of this application. To better understand the technical solutions in embodiments of this application, the following describes terms or concepts in embodiments of this application.

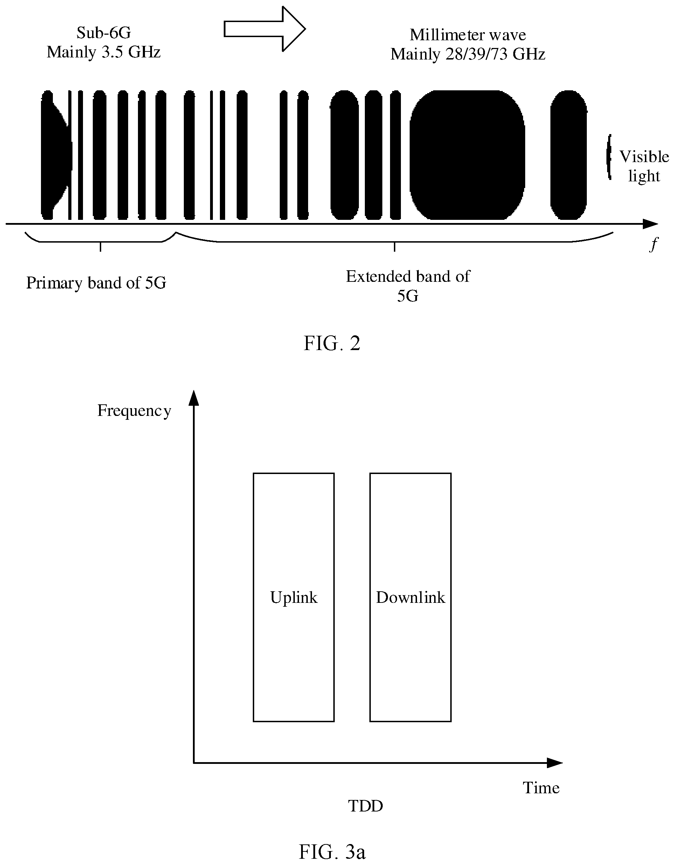

In 5G NR wireless communication, an entire spectrum includes two parts: a frequency range 1 (frequency range 1, FR 1) and a frequency range 2 (frequency range 2, FR 2). The FR 1 is a primary band of 5G and is also referred to as a Sub-6 GHz band, and a frequency range of the FR 1 is usually below 6 GHz. The FR 2 is an extended band of 5G, is also referred to as a millimeter wave band, and is also referred to as a 5G high band. 5G NR spectrum division may be shown in FIG. 2.

The FR 1 and the FR 2 are only two large scopes of the 5G NR spectrum division. The 3GPP fully considers current spectrum resource usage and future planning of countries around the world and divides the spectrum resources of the FR 1 and the FR 2 into several bands, and the band may also be referred to as a band (band). The division of the bands enables the countries to select appropriate bands based on available spectrums of the countries when 5G networks of the countries are deployed.

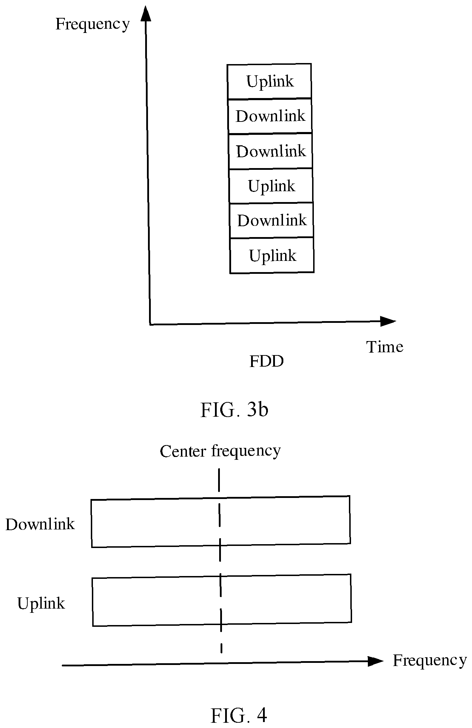

Spectrum deployment is also related to a duplex mode. Duplex modes in 5G include TDD and FDD. As shown in FIG. 3a, when same frequency resources are used for uplink communication and downlink communication of a network device and a terminal device, the frequency resources are distinguished only by a time domain resource. This is referred to as the time division duplex TDD. As shown in FIG. 3b, when different frequency resources are used for uplink communication and downlink communication of a network device and a terminal device. This is referred to as the frequency division duplex FDD.

The 5G NR divides the spectrum resources into the several bands, which are numbered in a form of "n + number". From a perspective of the spectrum division, a duplex mode of each band is clear.

Band division of the FR 1 may be shown in Table 1.

**Table 1**

| NR operating band (NR operating band) | Uplink (Uplink, UL) operating band (operating band) transmit | Downlink (Downlink, DL) operating band (operating band) | Duplex mode |
|---|---|---|---|
| | Base station receive/UE | Base station transmit/UE receive | Duplex Mode |
| | Lowest uplink frequency-Highest uplink frequency (F_{UL_low}-F_{UL_high}) | Lowest downlink frequency-Highest downlink frequency (F_{DL_low}-F_{DL_high}) | |
| n1 | 1920 MHz-1980 MHz | 2110 MHz-2170 MHz | FDD |
| n2 | 1850 MHz-1910 MHz | 1930 MHz-1990 MHz | FDD |
| n3 | 1710 MHz-1785 MHz | 1805 MHz-1880 MHz | FDD |
| n5 | 824 MHz-849 MHz | 869 MHz-894 MHz | FDD |
| n7 | 2500 MHz-2570 MHz | 2620 MHz-2690 MHz | FDD |
| n8 | 880 MHz-915 MHz | 925 MHz-960 MHz | FDD |
| n12 | 699 MHz-716 MHz | 729 MHz-746 MHz | FDD |
| n13 | 777 MHz-787 MHz | 746 MHz-756 MHz | FDD |
| n14 | 788 MHz-798 MHz | 758 MHz-768 MHz | FDD |
| n18 | 815 MHz-830 MHz | 860 MHz-875 MHz | FDD |

| NR operating band (NR operating band) | Uplink (Uplink, UL) operating band (operating band) transmit | Downlink (Downlink, DL) operating band (operating band) | Duplex mode |
|---|---|---|---|
| | Base station receive/UE | Base station transmit/UE receive | Duplex Mode |
| | | Lowest downlink frequency-Highest downlink frequency (F_{DL_low}-F_{DL_}high) | |
| | Lowest uplink frequency-Highest uplink frequency (F_{UL_low}-F_{UL_high}) | | |
| n20 | 832 MHz-862 MHz | 791 MHz-821 MHz | FDD |
| n24¹⁶ | 1626.5 MHz-1660.5 MHz | 1525 MHz-1559 MHz | FDD |
| n25 | 1850 MHz-1915 MHz | 1930 MHz-1995 MHz | FDD |
| n26 | 814 MHz-849 MHz | 859 MHz-894 MHz | FDD |
| n28 | 703 MHz-748 MHz | 758 MHz-803 MHz | FDD |
| n29 | N/A | 717 MHz-728 MHz | SDL |
| n30 | 2305 MHz-2315 MHz | 2350 MHz-2360 MHz | FDD |
| n34 | 2010 MHz-2025 MHz | 2010 MHz-2025 MHz | TDD |
| n38 | 2570 MHz-2620 MHz | 2570 MHz-2620 MHz | TDD |
| n39 | 1880 MHz-1920 MHz | 1880 MHz-1920 MHz | TDD |
| n40 | 2300 MHz-2400 MHz | 2300 MHz-2400 MHz | TDD |
| n41 | 2496 MHz-2690 MHz | 2496 MHz-2690 MHz | TDD |
| n46 | 5150 MHz-5925 MHz | 5150 MHz-5925 MHz | TDD |
| n47 | 5855 MHz-5925 MHz | 5855 MHz-5925 MHz | TDD |
| n48 | 3550 MHz-3700 MHz | 3550 MHz-3700 MHz | TDD |
| n50 | 1432 MHz-1517 MHz | 1432 MHz-1517 MHz | TDD |
| n51 | 1427 MHz-1432 MHz | 1427 MHz-1432 MHz | TDD |
| n53 | 2483.5 MHz-2495 MHz | 2483.5 MHz-2495 MHz | TDD |
| n65 | 1920 MHz-2010 MHz | 2110 MHz-2200 MHz | FDD |
| n66 | 1710 MHz-1780 MHz | 2110 MHz-2200 MHz | FDD |
| n67 | N/A | 738 MHz-758 MHz | SDL |
| n70 | 1695 MHz-1710 MHz | 1995 MHz-2020 MHz | FDD |
| n71 | 663 MHz-698 MHz | 617 MHz-652 MHz | FDD |
| n74 | 1427 MHz-1470 MHz | 1475 MHz-1518 MHz | FDD |
| n75 | N/A | 1432 MHz-1517 MHz | SDL |
| n76 | N/A | 1427 MHz-1432 MHz | SDL |
| n77 | 3300 MHz-4200 MHz | 3300 MHz-4200 MHz | TDD |

| NR operating band (NR operating band) | Uplink (Uplink, UL) operating band (operating band) transmit | Downlink (Downlink, DL) operating band (operating band) | ex mode |
|---|---|---|---|
| | Base station receive/UE transmit | Base station transmit/UE receive | Duplex Mode |
| | | Lowest downlink frequency-Highest downlink frequency (F_{DL_low}-F_{DL_}high) | |
| | Lowest uplink frequency-Highest uplink frequency (F_{UL_low}-F_{UL_}high) | | |
| n78 | 3300 MHz-3800 MHz | 3300 MHz-3800 MHz | TDD |
| n79 | 4400 MHz-5000 MHz | 4400 MHz-5000 MHz | TDD |
| n80 | 1710 MHz-1785 MHz | N/A | SUL |
| n81 | 880 MHz-915 MHz | N/A | SUL |
| n82 | 832 MHz-862 MHz | N/A | SUL |
| n83 | 703 MHz-748 MHz | N/A | SUL |
| n84 | 1920 MHz-1980 MHz | N/A | SUL |
| n85 | 698 MHz-716 MHz | 728 MHz-746 MHz | FDD |
| n86 | 1710 MHz-1780 MHz | N/A | SUL |
| n89 | 824 MHz-849 MHz | N/A | SUL |
| n90 | 2496 MHz-2690 MHz | 2496 MHz-2690 MHz | TDD |
| n91 | 832 MHz-862 MHz | 1427 MHz-1432 MHz | FDD |
| n92 | 832 MHz-862 MHz | 1432 MHz-1517 MHz | FDD |
| n93 | 880 MHz-915 MHz | 1427 MHz-1432 MHz | FDD |
| n94 | 880 MHz-915 MHz | 1432 MHz-1517 MHz | FDD |
| n95 | 2010 MHz-2025 MHz | N/A | SUL |
| n96 | 5925 MHz-7125 MHz | 5925 MHz-7125 MHz | TDD |
| n97 | 2300 MHz-2400 MHz | N/A | SUL |
| n98 | 1880 MHz-1920 MHz | N/A | SUL |
| n99 | 1626.5 MHz-1660.5 MHz | N/A | SUL |

It should be noted that a downlink operation in the n24 band is limited to 1526 MHz to 1536 MHz, and an uplink operation is limited to 1627.5 MHz to 1637.5 MHz and 1646.5 MHz to 1656.5 MHz.

Band division of the FR 2 may be shown in Table 2.

**Table 2**

| Operating band Operating Band | Uplink operating band | Downlink operating band | Duplex mode |
|---|---|---|---|
| | Uplink (UL) operating band | Downlink (DL) operating band | |
| | Base station receive BS receive | Base station transmit BS transmit | Duplex Mode |
| | | UE receive UE receive | |
| | UE transmit UE transmit | | |
| | Lowest uplink frequency-Highest uplink frequency F_{UL_low}-F_{UL_high} | Lowest downlink frequency-Highest downlink frequency F_{DL_low}-F_{DL_high} | |
| n257 | 26500 MHz - 29500 MHz | 26500 MHz - 29500 MHz | TDD |
| n258 | 24250 MHz - 27500 MHz | 24250 MHz - 27500 MHz | TDD |
| n259 | 39500 MHz - 43500 MHz | 39500 MHz - 43500 MHz | TDD |
| n260 | 37000 MHz - 40000 MHz | 37000 MHz - 40000 MHz | TDD |
| n261 | 27500 MHz - 28350 MHz | 27500 MHz - 28350 MHz | TDD |
| n262 | 47200 MHz - 48200 MHz | 47200 MHz - 48200 MHz | TDD |

Based on the band division of the FR 1 and the FR 2 shown in Table 1 and Table 2 and the duplex mode corresponding to the band, the following describes features of the TDD and the FDD.

Feature 1: For a band whose duplex mode is the TDD in the FR 1 and the FR 2, center frequencies of an uplink carrier and a downlink carrier of a cell deployed on the band are aligned, and bandwidths of the uplink carrier and the downlink carrier are the same. In other words, an uplink channel bandwidth and a downlink channel bandwidth of the terminal device are symmetrical, and bandwidth symmetry may be understood as having a same bandwidth. Feature 1 may be indicated by FIG. 4.

For the band n50, the uplink channel bandwidth and the downlink channel bandwidth of the terminal device may be symmetric or may be different. If the uplink channel bandwidth and the downlink channel bandwidth of the terminal device are not symmetric, it conforms to a definition of an asymmetric UL and DL channel bandwidth combination in the TDD, and the definition is shown in Table 3.

**Table 3**

| NR band | Uplink channel bandwidth | Downlink channel bandwidth |
|---|---|---|
| NR Band | Channel bandwidths for UL (MHz) | Channel bandwidths for DL (MHz) |
| n50 | 60 | 80 |

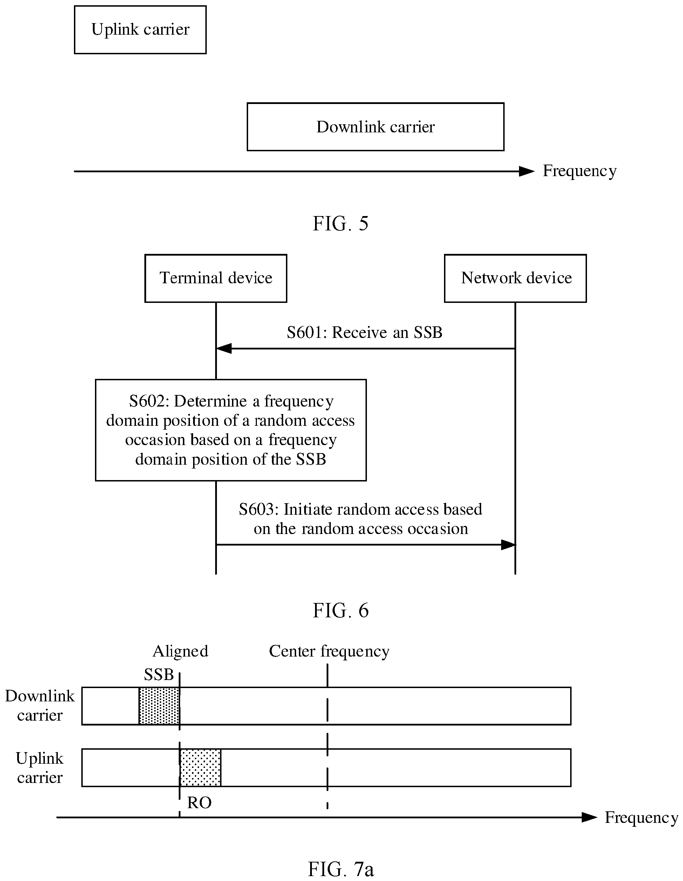

Feature 2: For a band whose duplex mode is the FDD in the FR 1, center frequencies of an uplink carrier and a downlink carrier of a cell deployed on the band are not aligned. Bandwidths of the uplink carrier and the downlink carrier may be symmetric. For a specific band, bandwidths of the uplink carrier and the downlink carrier may alternatively be asymmetric. An example of asymmetry is shown in FIG. 5.

Feature 2-1: When the uplink and downlink channel bandwidths of the FDD band are symmetrical, a separation between the center frequencies of the uplink carrier and the downlink carrier is predefined in a protocol. The separation between the center frequencies of the uplink carrier and the downlink carrier may also be referred to as a default TX-RX carrier centre frequency separation (TX-RX carrier centre frequency separation). The TX-RX carrier centre frequency separation is shown in Table 4.

**Table 4**

| NR operating band | TX-RX carrier centre frequency separation |
|---|---|
| NR Operating Band | |
| n1 | 190 MHz |
| n2 | 80 MHz |
| n3 | 95 MHz |
| n5 | 45 MHz |
| n7 | 120 MHz |
| n8 | 45 MHz |
| n12 | 30 MHz |
| n13 | -31 MHz |
| n14 | -30 MHz |
| n18 | 45 MHz |
| n20 | -41 MHz |
| n24 | -101.5 MHz, -120.5 MHz |
| n25 | 80 MHz |
| n26 | 45 MHz |
| n28 | 55 MHz |
| n30 | 45 MHz |
| n65 | 190 MHz |
| n66 | 400 MHz |
| n70 | 300 MHz |
| n71 | -46 MHz |
| n74 | 48 MHz |
| n85 | 30 MHz |
| n91 | 570 MHz-595 MHz |
| n92 | 575 MHz-680 MHz (*µ* = 0) |
| | 580 MHz-675 MHz (*µ* = 1) |
| n93 | 517 MHz-547 MHz |
| n94 | 522 MHz-632 MHz (*µ* = 0) |
| | 527 MHz-627 MHz (*µ* = 1) |

Feature 2-2: When the uplink and downlink channel bandwidths of the FDD band are asymmetric, an operating bandwidth and a supported asymmetric channel bandwidth combination are shown in Table 5.

**Table 5**

| Operating band NR Band | Uplink channel bandwidth Channel bandwidths for UL (MHz) | Downlink channel bandwidth Channel bandwidths for DL (MHz) |
|---|---|---|
| n66 | 5, 10 | 20, 40 |
| | 20 | 40 |
| | 5, 10 | 20, 25, 30, 40 |
| | 20, 25, 30 | 40 |
| n70 | 5, 10 | 15 |
| | 5, 10, 15 | 20, 25 |
| n71 | 5 | 10 |
| | 10 | 15 |
| | 15 | 20 |
| n91¹ | 10 | 5 |
| n92¹ | 5 | 10, 15, 20 |
| | 10 | 15, 20 |
| n93^{x} | 10 | 5 |
| n94¹ | 5 | 10, 15, 20 |
| | 10 | 15, 20 |

Based on the descriptions of the foregoing system architecture, spectrum division, duplex mode, and corresponding features, the following describes in detail embodiments of this application with reference to the accompanying drawings.

As shown in FIG. 6, procedures of a random access method provided in this application are described as follows:
S601: A terminal device receives an SSB.

A network device broadcasts the SSB. Correspondingly, the terminal device receives the SSB from the network device.

The terminal device may scan the SSB based on a synchronization raster or prior information, obtain related information such as a cell identifier based on the SSB, and perform downlink synchronization. Optionally, the SSB includes four symbols in time domain and includes 240 consecutive subcarriers (namely, 20 resource blocks (resource block, RB)) in frequency domain.

S602: The terminal device determines a frequency domain position of a random access occasion based on a frequency domain position of the SSB.

S603: The terminal device initiates random access based on the random access occasion.

The random access occasion includes a frequency domain resource determined based on the frequency domain position of the random access occasion. Alternatively, it may be considered that the random access occasion is determined based on the frequency domain position of the random access occasion in S602.

According to the method in the embodiment in FIG. 6, the frequency domain position of the random access occasion is determined based on the frequency domain position of the SSB, and the random access is initiated based on the random access occasion. In this way, during network upgrade, without receiving and decoding an SIB 1, the terminal device can determine the frequency domain position of the random access occasion, initiate the random access, and successfully access the network or a cell. This solution can resolve a compatibility problem of accessing the network by the terminal device. When a compatibility error occurs on either the terminal device or the network, the terminal device and the network can be rolled back to a configuration that does not affect an access process to continue communication. The communication mode may be referred to as a security mode or a robust compatibility mode. After accessing the network in the robust compatibility mode or the security mode, the terminal device may perform a process like upgrade or error correction, to ensure that the terminal device can subsequently normally access the network.

If there is only one random access occasion (namely, a random access occasion of frequency division multiplexing) in the frequency domain, the random access occasion is denoted as a first random access occasion, the terminal device determines a frequency domain position of the first random access occasion based on the frequency domain position of the SSB in S602, and in S603, the terminal device initiates the random access based on the first random access occasion.

If a plurality of random access occasions (namely, random access occasions of frequency division multiplexing) are included in the frequency domain, it may be understood that in S602, the terminal device determines the frequency domain position of the first random access occasion based on the frequency domain position of the SSB, and then, determines frequency domain positions of the plurality of random access occasions based on the frequency domain position of the first random access occasion. For example, the frequency domain position of the first random access occasion is a start, and a plurality of frequency domain units are offset in a high frequency direction or a low frequency direction to obtain the frequency domain positions of the plurality of random access occasions. That the terminal device initiates the random access based on the random access occasion in S603 may mean that the terminal device selects a random access occasion based on a mapping relationship between the SSB and the random access occasion and initiates the random access on the selected random access occasion. It may be understood that, in this case, the random access occasion selected by the terminal device is not necessarily the first random access occasion whose frequency domain position is determined based on the frequency domain position of the SSB. The mapping relationship between the SSB and the random access occasion may be predefined in a protocol.

If the plurality of random access occasions are included in the frequency domain, it may be understood that in S602, the terminal device determines the frequency domain position of the random access occasion based on the frequency domain position of the SSB, or it may be understood that the terminal device determines the frequency domain positions of the plurality of random access occasions based on the frequency domain position of the SSB. A specific determining manner may be first determining the frequency domain position of the first random access occasion and then determining the frequency domain positions of the plurality of random access occasions based on the frequency domain position of the first random access occasion. That the terminal device initiates the random access based on the random access occasion in S603 may mean to select a random access occasion based on the frequency domain positions of the plurality of random access occasions determined in S602 and based on the mapping relationship between the SSB and the random access occasion, and initiate the random access on the selected random access occasion. Similarly, the random access occasion selected for initiating the random access is not necessarily the first random access occasion.

The frequency domain position of the random access occasion is determined based on the frequency domain position of the SSB. In this way, without receiving and decoding the SIB 1, the terminal device can determine the frequency domain position of the random access occasion, initiate the random access, and successfully access the network or the cell.

A random access process may be implemented by using different methods. For example, the random access process may include a four-step random access process. Specifically, the terminal device sends a random access preamble (preamble) to the network device on the random access occasion, the network device returns a random access response (random access response, RAR) to the terminal device, the terminal device sends a message 3 (Msg3) to the network device, where the message 3 may be a radio resource control (Radio Resource Control, RRC) setup request message, an RRC resume request message, or the like, and the network device sends a message 4 to the terminal device, where the message 4 may be a contention resolution message, and the message 4 may include a contention resolution identifier. For another example, the random access process may further include a two-step random access process. Specifically, the terminal sends a message A (msgA) to the network device, and the network device sends a message B to the terminal. The message A includes two parts. For example, the message A includes a preamble sent by a physical random access channel (physical random access channel, PRACH) and a message sent by a PUSCH channel. The terminal device and the network device complete the random access process by using the two steps of message sending and receiving.

Based on this, in this embodiment of this application, the terminal device may send the preamble to the network device on a PRACH resource. For the two-step random access process, for ease of description, a time-frequency resource occupied by the msgA may be described as two parts. A resource occupied by the preamble is a PRACH time-frequency resource (or a PRACH resource), and a resource occupied by the PUSCH is a PUSCH time-frequency resource (or a PUSCH resource). Usually, a DMRS is sent on a specified symbol in the PUSCH resource.

In the embodiment in FIG. 6, the random access occasion in S602 is the PRACH resource, and the frequency domain position of the random access occasion in S602 is a frequency domain position of the PRACH resource. The PRACH resource may be indicated by a PRACH transmission occasion (RACH occasion, RO). One RO indicates a time-frequency resource used to transmit the preamble and includes one or more subcarriers in the frequency domain, or one RO includes one or more resource blocks (RBs) in the frequency domain. One RO includes one or more time domain symbols in the time domain. With reference to S602 and S603 in the embodiment in FIG. 6, that the random access occasion is the PRACH resource is used for description. For the four-step random access, the terminal device determines the frequency domain position of the PRACH resource based on the frequency domain position of the SSB, and the terminal device initiates the random access based on the PRACH resource, for example, sends the random access preamble on the PRACH resource. The PRACH resource includes a frequency domain resource determined based on the frequency domain position of the PRACH. For the two-step random access, the terminal device determines the frequency domain position of the PRACH resource based on the frequency domain position of the SSB, and the terminal device initiates the random access based on the PRACH resource, for example, sends the random access preamble on the PRACH resource. The PRACH resource includes the frequency domain resource determined based on the frequency domain position of the PRACH. After the PRACH resource is determined, a corresponding PUSCH resource may be determined by using the PRACH resource. For example, the PUSCH resource is after a fixed quantity of slots/symbols of the PRACH resource, or there is a fixed quantity of RB spacings between the PUSCH resource and the PRACH resource.

The following describes how to determine the random access occasion. The random access occasion includes resources in two dimensions: a frequency domain resource and a time domain resource.

The time domain resource of the random access occasion may include a time domain periodicity, a start symbol, and a quantity of consecutive symbols. The time domain resource of the random access occasion may be predefined in the protocol. For example, a periodicity of the random access occasion, a radio frame identifier in which the start symbol is located, a subframe identifier, a slot identifier, a symbol identifier, and the quantity of consecutive symbols are specified in the protocol. Alternatively, the time domain resource of the random access occasion is determined based on a time domain resource of the SSB. For example, the time domain periodicity of the random access occasion is determined based on an initial access periodicity (for example, 20 ms) of the SSB. For another example, the start symbol of the random access occasion is W symbols after the time domain resource of the SSB, where W is an integer greater than or equal to 0. When the start symbol of the random access occasion is the W symbols after the time domain resource of the SSB, the mapping relationship between the SSB and the random access occasion is as follows: There is a mapping relationship between the SSB and the random access occasion in the time domain. In this case, if there are the plurality of random access occasions in given time domain, the random access occasion in the time domain may be randomly selected or selected according to a predefined rule. The predefined rule may include the mapping relationship between the SSB and the random access occasion. For example, one SSB has a mapping relationship with one or more random access occasions. For another example, one random access occasion has a mapping relationship with one or more SSBs.

The frequency domain resource of the random access occasion may include the frequency domain position of the random access occasion and a frequency domain unit included in the random access occasion. The random access occasion may include a second quantity of frequency domain units in the frequency domain.

The second quantity is indicated by X, where X is a positive integer. For example, a value of X may be 2, 3, 6, or 12. The random access occasion is indicated by using an RO. In this case, one RO includes X frequency domain units. The value of the second quantity may be predefined in the protocol or may be configured by the network. If the value is configured by the network, for example, the value of the second quantity may be configured in an MIB or a PBCH. If a plurality of ROs are included in the frequency domain, a quantity of RBs included in the plurality of ROs may be obtained based on a quantity of RBs included in the one RO.

In this embodiment of this application, the frequency domain unit may be the RB or may be the subcarrier (subcarrier). In the description of the embodiment, that the frequency domain unit is the RB is used as an example.

The frequency domain position of the random access occasion may be determined based on the frequency domain position of the SSB. The following provides optional implementations in which the terminal device determines the frequency domain position of the random access resource based on the frequency domain position of the SSB. The implementations include Manner 1, Manner 2, and Manner 3.

The terminal device scans the synchronization raster to determine a frequency at which the SSB is located or the frequency domain position of the SSB. The frequency at which the SSB is located may be understood as a center frequency of the SSB. Optionally, the frequency domain position of the SSB may be determined based on the frequency at which the SSB is located. Based on determining the frequency domain position of the SSB, the frequency domain position of the random access occasion may be determined in the following optional manners.

Manner 1: A spacing between the frequency domain position of the random access occasion and the frequency domain position of the SSB is a first quantity of frequency domain units. The first quantity is indicated by M, where M is an integer greater than or equal to 0. A value of the first quantity may be predefined in the protocol or may be configured by the network. If the value is configured by the network, for example, the value of the first quantity may be configured in the MIB or the PBCH.

The frequency domain position of the random access occasion refers to a specific frequency within a frequency range within which the random access occasion is located, and the frequency domain position of the SSB may also refer to a specific frequency within a frequency range within which the SSB is located. The frequency domain position of the random access resource is determined based on the frequency domain position of the SSB. The frequency domain position of the random access occasion may be in M frequency domain units before or after the frequency domain position of the SSB. It should be noted that the frequency domain position of the random access occasion may be before or after the frequency domain position of the SSB, which may be predefined in the protocol or may be configured by the network. That the frequency domain position of the random access occasion may be before or after the frequency domain position of the SSB is configured by the network. In this case, the network device may use one bit to indicate that the frequency domain position of the random access occasion is before (in the low frequency direction) or after (in the high frequency direction) the frequency domain position of the SSB. Specifically, the network device may use a value of the one bit to indicate. For example, when the value of the bit is set to " 1", it indicates that the frequency domain position of the random access occasion is before the frequency domain position of the SSB. On the contrary, when the value of the bit is set to "0", it indicates that the frequency domain position of the random access occasion is after the frequency domain position of the SSB.

The frequency domain position of the random access occasion may be any one of the following: a frequency domain starting position of the random access occasion, a frequency domain ending position of the random access occasion, or a center frequency of the random access occasion. The frequency domain position of the SSB may be any one of the following: a frequency domain starting position of the SSB, a frequency domain ending position of the SSB, or a center frequency of the SSB.

For example, a spacing between the frequency domain starting position of the random access occasion and the frequency domain ending position of the SSB is M RBs, a spacing between the frequency domain starting position of the random access occasion and the center frequency of the SSB is M RBs, a spacing between the center frequency of the random access occasion and the center frequency of the SSB is M RBs, a spacing between the frequency domain ending position of the random access occasion and the frequency domain ending position of the SSB is M RBs, a spacing between the frequency domain starting position of the random access occasion and the frequency domain starting position of the SSB is M RBs, a spacing between the frequency domain starting position of the random access occasion and the center frequency of the SSB is M RBs, a spacing between the frequency domain ending position of the random access occasion and the center frequency of the SSB is M RBs, a spacing between the center frequency of the random access occasion and the frequency domain starting position of the SSB is M RBs, or a spacing between the center frequency of the random access occasion and the frequency domain ending position of the SSB is M RBs.

The following uses schematic diagrams to describe a method for determining the frequency domain position of the random access occasion according to Manner 1. In the schematic diagram, the random access occasion is indicated by the RO.

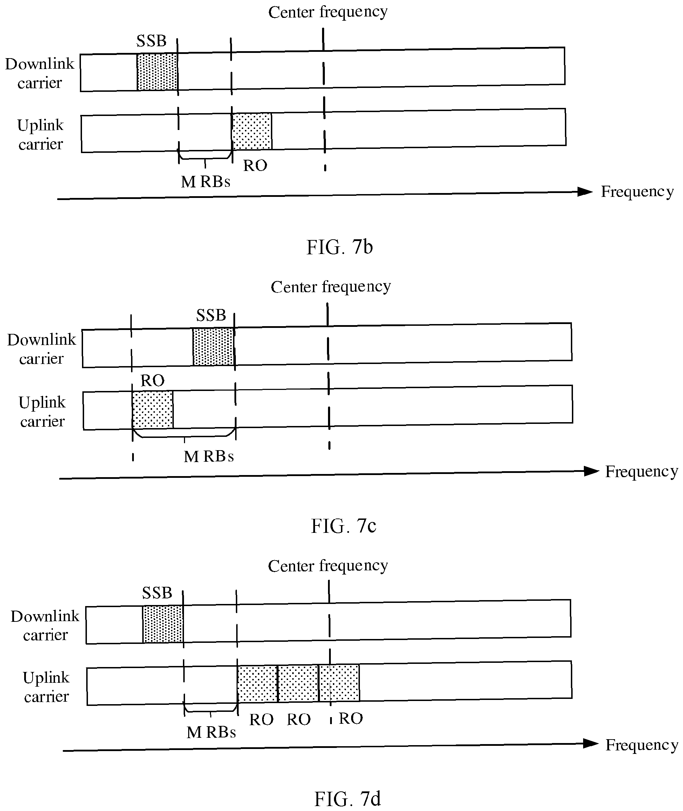

In an embodiment, the terminal device determines the frequency domain starting position of the random access occasion based on the frequency domain ending position of the SSB. For example, the spacing between the frequency domain starting position of the random access occasion and the frequency domain ending position of the SSB is the M RBs. As shown in FIG. 7a, when M = 0, the frequency domain starting position of the random access occasion is aligned with the frequency domain ending position of the SSB. As shown in FIG. 7b, when M is greater than 0, the frequency domain starting position of the random access occasion is M RBs after the frequency domain ending position of the SSB. As shown in FIG. 7c, when M is greater than 0, the frequency domain starting position of the random access occasion may alternatively be M RBs before the frequency domain ending position of the SSB.

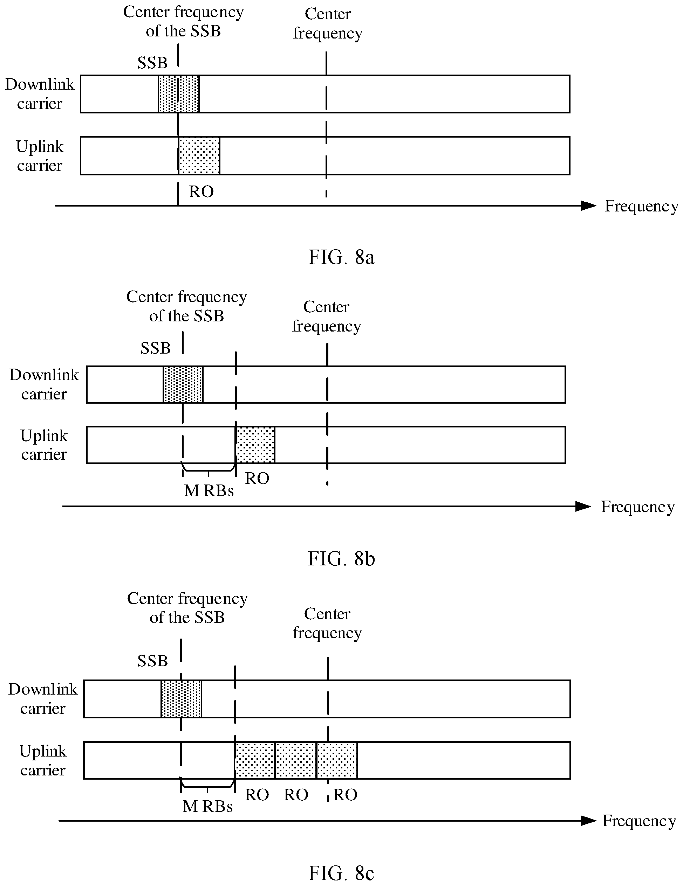

In another embodiment, the terminal device determines the frequency domain starting position of the random access occasion based on the center frequency of the SSB. For example, the spacing between the frequency domain starting position of the random access occasion and the center frequency of the SSB is the M RBs As shown in FIG. 8a, when M = 0, the frequency domain starting position of the random access occasion is aligned with the center frequency of the SSB. As shown in FIG. 8b, when M is greater than 0, the frequency domain starting position of the random access occasion is M RBs after the center frequency of the SSB. Certainly, the frequency domain starting position of the random access occasion may alternatively be M RBs before the center frequency of the SSB. The drawing illustrates a case in which the frequency domain starting position of the random access occasion is M RBs after the center frequency of the SSB. Similarly, when there is more than one random access occasion of frequency division multiplexing in the frequency domain, a frequency domain position of another random access occasion may be determined based on the first random access occasion.

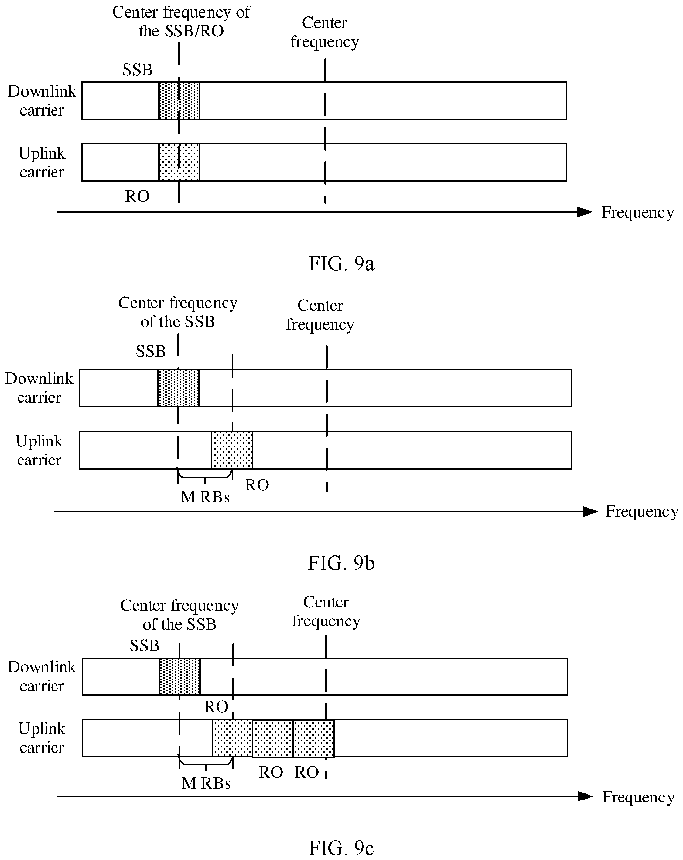

In still another embodiment, the terminal device determines the center frequency of the random access occasion based on the center frequency of the SSB. For example, the spacing between the center frequency of the random access occasion and the center frequency of the SSB is the M RBs. As shown in FIG. 9a, when M = 0, the center frequency of the random access occasion is aligned with the center frequency of the SSB. As shown in FIG. 9b, when M is greater than 0, the center frequency of the random access occasion is M RBs after the center frequency of the SSB. Certainly, the center frequency of the random access occasion may alternatively be M RBs before the center frequency of the SSB. The drawing illustrates a case in which the center frequency of the random access occasion is M RBs after the center frequency of the SSB.

It should be noted that if there is only one random access occasion in the frequency domain, the random access occasion is denoted as the first random access occasion, and Manner 1 is used to determine the frequency domain position of the first random access occasion. If there is more than the one random access occasion of frequency division multiplexing (FDMed) in the frequency domain, the first random access occasion may be determined according to Manner 1, and then the frequency domain position of the another random access occasion is determined based on the first random access occasion. For example, the frequency domain position of the first random access occasion starts to be sequentially offset in the high frequency direction or the low frequency direction until the frequency domain position of the another random access occasion is determined. For example, the random access occasion is the RO, one RO includes two RBs, and three ROs are included in the frequency domain. A first RO is determined according to Manner 1, and the first RO starts to be separately offset by two RBs and four RBs in the high frequency direction or in the low frequency direction, to obtain frequency domain positions of the other two ROs, so as to determine frequency domain positions of the three ROs. Based on the examples in FIG. 7a to FIG. 7c, FIG. 7b is used as an example. Based on FIG. 7b, the position of the one RO is determined. As shown in FIG. 7d, the position of the one RO is sequentially offset by two ROs, that is, four RBs in the high frequency direction, to obtain final frequency domain positions of three ROs. FIG. 8b is used as an example. Based on FIG. 8b, the position of the one RO is determined. As shown in FIG. 8c, the position of the one RO is sequentially offset by two RBs and four RBs in the high frequency direction, to obtain final frequency domain positions of three ROs. FIG. 9b is used as an example. Based on FIG. 9b, the position of the one RO is determined. As shown in FIG. 9c, the position of the one RO is sequentially offset by two RBs and four RBs in the high frequency direction, to obtain final frequency domain positions of three ROs. For ease of illustration, FIG. 7d, FIG. 8c, and FIG. 9c each show three consecutive ROs. It may be understood that the plurality of ROs may be consecutive or may be inconsecutive. When the plurality of ROs are inconsecutive, a fixed frequency domain unit may be spaced between neighboring ROs. A quantity of ROs included in the frequency domain may be predefined or configured in the MIB.

Another method for determining the frequency domain position of the random access occasion according to Manner 1 is not shown in diagrams one by one and may be obtained by referring to the foregoing examples. Manner 1 may be applicable to the time division duplex (TDD) duplex mode, that is, a duplex mode of a band on which the SSB is located is the TDD. In the TDD mode, when an uplink carrier bandwidth (an uplink channel bandwidth) is equal to a downlink carrier bandwidth (a downlink channel bandwidth), the frequency domain position of the random access occasion on an uplink carrier may be correspondingly determined based on the SSB on a downlink carrier. In this case, the terminal does not need any prior information of the uplink carrier.

Manner 2: A center frequency of the random access occasion is equal to a center frequency of the SSB. Alternatively, a center frequency of the frequency domain position of the random access occasion is aligned with a center frequency of the SSB. Alternatively, a center frequency of the frequency domain position of the random access occasion coincides with a center frequency of the SSB.

Manner 2 may be similar to the case in which the spacing between the center frequency of the random access occasion and the center frequency of the SSB is the M RBs and M = 0 in Manner 1. Manner 2 may refer to FIG. 9a. The center frequency of the random access occasion is aligned with the center frequency of the SSB.

Based on Manner 2, for example, X = 2, one RO includes two RBs. As shown in FIG. 9a, a center frequency of an RO is equal to the center frequency of the SSB, and a frequency domain resource of the random access resource is a frequency domain resource that uses the center frequency of the SSB as the center frequency and that includes two RBs.

Similarly, if there is more than one random access occasion of frequency division multiplexing in the frequency domain, the first random access occasion may be determined according to Manner 2, and then a frequency domain position of another random access occasion is determined based on the first random access occasion.

Manner 2 may be applicable to the time division duplex (TDD) duplex mode, that is, a duplex mode of a band on which the SSB and the random access resource occasion are located is the TDD. Optionally, an uplink channel bandwidth and a downlink channel bandwidth of the band or the cell are equal. When an uplink carrier bandwidth (an uplink channel bandwidth) is equal to a downlink carrier bandwidth (a downlink channel bandwidth), the frequency domain position of the random access occasion on an uplink carrier may be correspondingly determined based on the SSB on a downlink carrier. In this case, the terminal device does not need any prior information of the uplink carrier.

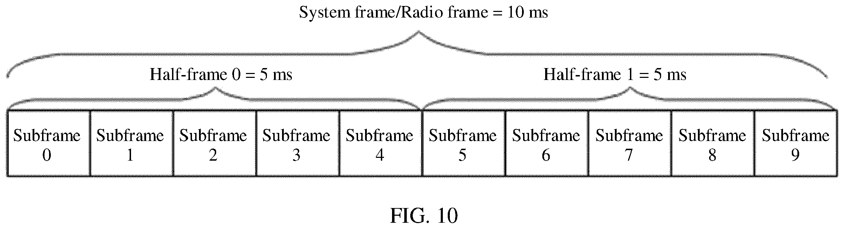

In the TDD mode, the time domain resource of the random access occasion (that is, the RO) is the uplink, and the time domain resource of the SSB is the downlink. The uplink and the downlink need not overlap in the time domain. In other words, a symbol occupied by the RO does not overlap a symbol occupied by the SSB. Based on this, the random access occasion is located in last Y symbols of a half-frame. Herein, the half-frame in which the random access occasion is located is denoted as a first half-frame, Y is a positive integer, and the first half-frame is a half-frame in which the SSB is located. Alternatively, the first half-frame is an N^{th} half-frame after a half-frame in which the SSB is located, and N is a positive integer. Alternatively, the first half-frame may be independent of a half-frame in which the SSB is located. The first half-frame may be determined based on the time domain periodicity of the RO, and the time domain periodicity of the RO may be predefined. In this case, the time domain periodicity of the RO may be independent of a time domain periodicity of the SSB, and in this case, N is not a fixed value. As shown in FIG. 10, the half-frame refers to first five subframes (a half-frame 0) or last five subframes (a half-frame 1) in a system frame, and each subframe includes a plurality of symbols. It should be noted that the random access occasion is located in the last Y symbols of the first half-frame, and a quantity of symbols occupied by the random access occasion may be less than or equal to Y If the quantity of symbols occupied by the random access occasion is less than Y, the random access occasion occupies y symbols in the last Y symbols of the half-frame, where y is greater than 0 and less than or equal to Y For example, a value of Y is 2, and the random access occasion occupies one or two symbols of last two symbols of the half-frame. For example, the random access occasion may occupy the last but fourteen symbol and the last but thirteen symbol of the half-frame. When the random access occasion is located in the last Y symbols of the half-frame, when the first random access occasion is determined, a subsequent random access occasion may be determined based on the periodicity of the random access occasion.

For different subcarrier spacings (subcarrier spacings, SCSs), a correspondence among a quantity of symbols included in each half-frame, a quantity of possible start symbols occupied by the SSB, and a last remaining symbol of the half-frame is shown in Table 6. Table 6 indicates a first symbol occupied by the SSB, and each SSB occupies four symbols. For example, four SSBs correspond to (2, 8, 16, 22), where (2, 8, 16, 22) respectively indicate a first symbol in the four SSBs, and symbols occupied by the four SSBs are respectively 2 to 5, 8 to 11, 16 to 19, and 22 to 25. The last remaining symbol of the half-frame may be understood as a symbol that is not occupied by the SSB. In the example of the last remaining symbol of the half-frame in Table 6, an ellipsis indicates consecutive symbols or may be indicated by "-". For example, (26, ..., 69) indicates that there are 44 symbols from 26 to 69.

**Table 6**

| SCS (kHz) | Quantity of symbols included in a half-frame (number) | First symbol occupied by an SSB | Last remaining symbol of the half-frame |
|---|---|---|---|
| 15 | 70 (0, ..., 69) | Four SSBs: (2, 8, 16, 22) | (26, ..., 69) |
| | | Eight SSBs: (2, 8, 16, 22, 30, 36, 44, 50) | **(54, ..., 69)** |
| 30 | 140 (0, ..., 139) | Four SSBs: (4, 8, 16, 20) (2, 8, 16, 22) | (24, ..., 139) (26, ..., 139) |
| | | Eight SSBs: (4, 8, 16, 20, 32, 36, 44, 48) (2, 8, 16, 22, 30, 36, 44, 50) | (52, ..., 139) |
| | | | (54, ..., 139) |
| 120 | 560 (0, ..., 559) | 64 SSBs: (4, 8, 16, 20, 3, 36, 44, 48, 60, 64, 72, 76, ..., 480, 484, 492, 496, 508, 512, 520, 524) | (528, ..., 559) |
| 240 | 1120 (0, ..., 1119) | 64 SSBs: (8, 12, 16, 20, 32, 36, 40, 44, 64, 68, 72, 76, ..., 456, 460, 464, 468, 480, 484, 488, 492) | (496, ..., 1119) |

It can be learned from Table 6 that, under different SCSs, the symbols occupied by the SSB are different, and the quantity of last remaining symbols of the half-frame is also different. In a possible design, symbols that are of half-frames and that are occupied by the random access occasions are separately specified for the different SCSs, that is, values of Y are respectively set for the different SCSs, and the values of Y may be set based on quantities of last remaining symbols of the half-frames corresponding to the different SCSs, where the value of Y indicates that the random access occasion is located in the last Y symbols of the half-frame. Based on Table 6, as shown in Table 7, the values of Y are respectively set for the different SCSs.

**Table 7**

| SCS (kHz) | Quantity of symbols included in a half-frame (number) | First symbol occupied by an SSB | Last remaining symbol of the half-frame | Value of Y |
|---|---|---|---|---|
| 15 | 70 (0, ..., 69) | Four SSBs: (2, 8, 16, 22) | (26, ..., 69) | 44 |
| | | Eight SSBs: (2, 8, 16, 22, 30, 36, 44, 50) | **(54, ..., 69)** | 16 |
| 30 | 140 (0, ..., 139) | Four SSBs: (4, 8, 16, 20) (2, 8, 16, 22) | (24, ..., 139) | 116 |
| | | | (26, ..., 139) | 114 |
| | | Eight SSBs: | | |
| | | (4, 8, 16, 20, 32, 36, 44, 48) | (52, ..., 139) | 88 |
| | | (2, 8, 16, 22, 30, 36, 44, 50) | (54, ..., 139) | 86 |
| 120 | 560 (0, ..., 559) | 64 SSBs: (4, 8, 16, 20, 3, 36, 44, 48, 60, 64, 72, 76, ..., 480, 484, 492, 496, 508, 512, 520, 524) | (528, ..., 559) | 32 |
| 240 | 1120 (0, ..., 1119) | 64 SSBs: (8, 12, 16, 20, 32, 36, 40, 44, 64, 68, 72, 76, ..., 456, 460, 464, 468, 480, 484, 488, 492) | (496, ..., 1119) | 624 |

As shown in Table 7, for example, when the SCS = 15 kHz and a quantity of SSBs is 4, the last remaining symbols of the half-frame are (26, ..., 69), there are 44 symbols in total, and the value of Y is set to 44. Certainly, the value of Y may alternatively be set to a value less than 44. For another example, when the SCS = 30 kHz and the quantity of SSBs is 8, the last remaining symbols of the half-frame are (52, ..., 139) or (54, ..., 139), there are 88 or 86 symbols in total, and the value of Y is set to 88 or 86. Certainly, the value of Y may alternatively be set to a value less than 88 or 86.

It can be learned from Table 7 that, in the different SCSs, the quantity of remaining symbols in the half-frame in which the SSB is located is at least 16, and the value of Y is at least 16. Based on this, it may be specified in the protocol that the symbols of the random access occasion are located in the last 16 symbols in the half-frame. The symbols of the random access occasion may be some or all of the last 16 symbols of the half-frame. For example, the symbols of the random access occasion are the last but fourteen symbol and the last but thirteen symbol of the half-frame. When the symbols of the random access occasion are some of the last 16 symbols of the half-frame, the some of the last 16 symbols that are of the half-frame and that correspond to the symbols of the random access occasion may be predefined in the protocol.

A manner of setting the Y symbols that are of the half-frame and that are occupied by the random access resource may be specified in the protocol in advance or may be notified by the network side to the terminal device.

In the frequency division duplex (FDD) duplex mode, that is, when the duplex mode of the band on which the SSB is located is the FDD, the following Manner 3 may be used.

Manner 3: A center frequency of the random access resource is determined based on a center frequency of the SSB and a preset frequency separation. For example, a position in which the center frequency of the SSB is offset forward by the preset frequency separation is the center frequency of the random access occasion. For another example, a position in which the center frequency of the SSB is offset backward by the preset frequency separation is the center frequency of the random access occasion.

The preset frequency separation may be a TX-RX carrier centre frequency separation (TX-RX carrier centre frequency separation). The TX-RX carrier centre frequency separation may be predefined in the protocol, for example, may be shown in Table 4.

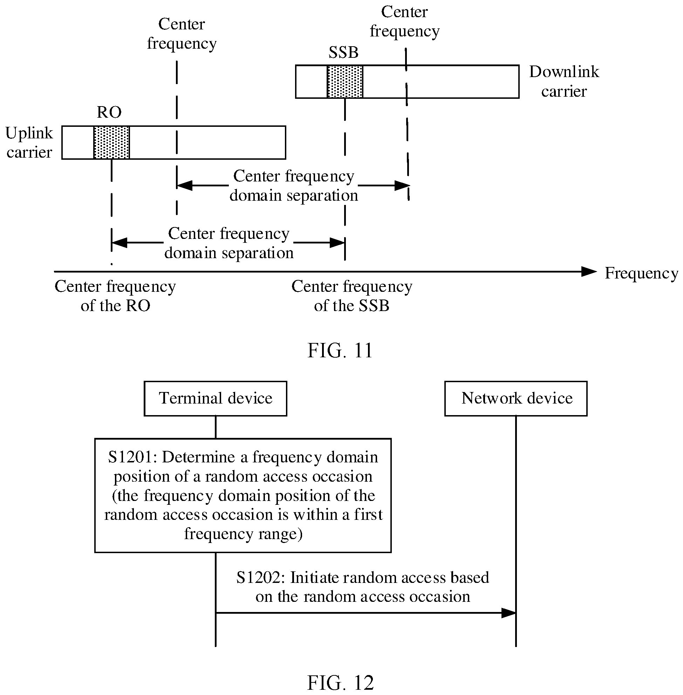

In an embodiment, a difference between the center frequency of the random access occasion and the center frequency of the SSB is the preset frequency separation. The center frequency of the random access occasion satisfies the following formula: *F_{RO}* = *Fss_{ref}* - *F_{Tx-Rx_separation}. F_{RO}* is the center frequency of the random access occasion, *Fss_{ref}* is the center frequency of the SSB that is determined by the terminal device through scanning, *F_{Tx-Rx_separation}* is the TX-RX carrier centre frequency separation, and the TX-RX carrier centre frequency separation may be referred to as a center frequency domain separation for short. The difference between the center frequency of the random access resource and the center frequency of the SSB is the TX-RX carrier centre frequency separation, and may be a position in which the center frequency of the random access occasion is offset after the center frequency of the SSB by the center frequency domain separation or may be a position in which the center frequency of the random access occasion is offset before the center frequency of the SSB by the center frequency domain separation. FIG. 11 shows the position in which the center frequency of the random access resource is offset after the center frequency of the SSB by the center frequency domain separation.

In the FDD mode, for different bands, when the uplink channel bandwidth is equal to the downlink channel bandwidth, the TX-RX carrier centre frequency separation is predefined. The difference between the center frequency of the random access resource and the center frequency of the SSB is the TX-RX carrier centre frequency separation. Because the uplink channel bandwidth is equal to the downlink channel bandwidth, it can be ensured that the center frequency of the random access resource is within an uplink carrier range, and the terminal device does not need any prior information of the carrier.

It should be noted that, when an operating band of a cell is a band n24, the TX-RX carrier centre frequency separation corresponding to the band n24 has two values. For the band n24, the terminal device may determine, based on prior information, one or two of two preset frequency separations corresponding to n24 and determines the center frequency of the random access occasion based on the determined preset frequency separation. For example, if the terminal device determines, based on the prior information, that the terminal device worked on a UL frequency corresponding to one of the two values, the terminal device selects the center frequency separation determined based on the prior information. If the terminal device determines, based on the prior information, that the terminal device worked on UL frequencies corresponding to the two values, the terminal device randomly selects a center frequency separation.

Similarly, when there is more than one random access occasion of frequency division multiplexing in the frequency domain, the frequency domain position of the first random access occasion may be determined according to Manner 3, and a frequency domain position of another random access occasion is determined based on the first random access occasion.

Based on a same technical concept of Manner 3, the following solution may be extended: The frequency domain position of the random access occasion is determined based on the frequency domain position of the SSB and the preset frequency separation. For the frequency domain position of the random access occasion and the frequency domain position of the SSB, refer to the descriptions in Manner 1. The frequency domain position of the random access occasion may be any one of a frequency domain starting position of the random access occasion, a frequency domain ending position of the random access occasion, or a center frequency of the random access occasion. The frequency domain position of the SSB may be any one of a frequency domain starting position of the SSB, a frequency domain ending position of the SSB, or a center frequency of the SSB. Based on this, an example of an implementation similar to that of Manner 3 is as follows: The frequency domain starting position of the random access occasion is determined based on the frequency domain starting position of the SSB and the preset frequency separation, the frequency domain starting position of the random access occasion is determined based on the frequency domain ending position of the SSB and the preset frequency separation, the frequency domain starting position of the random access occasion is determined based on the center frequency of the SSB and the preset frequency separation, and the center frequency of the random access occasion is determined based on the frequency domain starting position of the SSB and the preset frequency separation. For more possible combinations of the frequency domain position of the random access occasion and the frequency domain position of the SSB, examples are not listed one by one.

Manner 1 to Manner 3 describe how to determine the frequency domain position of the random access occasion based on the frequency domain position of the SSB.

When Manner 1 and Manner 2 are applied to a TDD duplex mode scenario, the TDD satisfies Feature 1. However, for a band n50, an uplink channel bandwidth and a downlink channel bandwidth of the terminal device may be symmetric or may be different. For the band n50, when the uplink channel bandwidth and the downlink channel bandwidth of the terminal device are symmetric, the frequency domain position of the random access occasion may be determined by using Manner 1 or Manner 2.

If the uplink channel bandwidth and the downlink channel bandwidth of the terminal device are asymmetric, the uplink channel bandwidth of the terminal device is 60 MHz, and the downlink channel bandwidth of the terminal device is 80 MHz. In this case, the frequency domain position of the random access occasion may also be determined by using Manner 1 or Manner 2. However, because the downlink channel bandwidth is greater than the uplink channel bandwidth, the frequency domain position of the SSB may fall in a part at which the downlink bandwidth is greater than the uplink bandwidth. In this case, the frequency domain position of the random access occasion cannot be determined based on the frequency domain position of the SSB. In view of this, an embodiment of this application further provides a random access method. As shown in FIG. 12, procedures of the random access method are described as follows:

S1201: A terminal device determines a frequency domain position of a random access occasion, where the frequency domain position of the random access occasion is within a first frequency range.

A starting position of the first frequency range is 1457 MHz, and an ending position of the first frequency range is 1492 MHz.

S1202: The terminal device initiates random access based on the random access occasion.

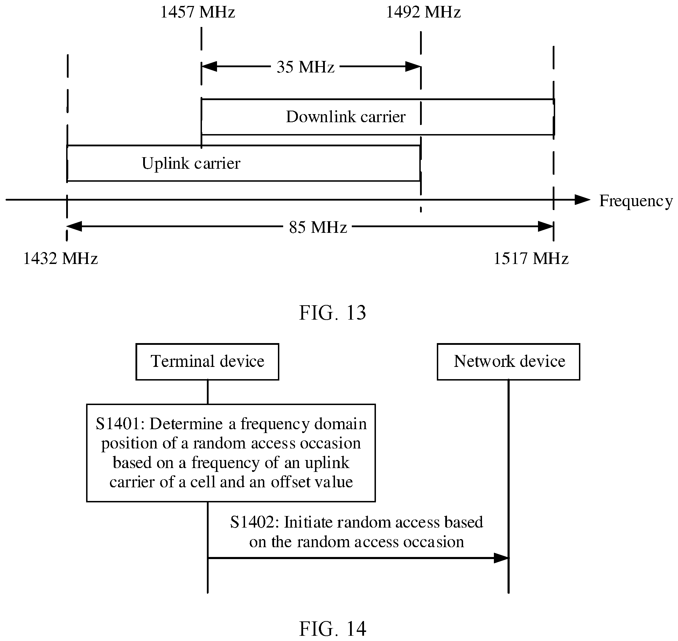

In the embodiment in FIG. 12, the terminal device determines the frequency domain position of the random access resource, where the frequency domain position of the random access resource is within the first frequency range. The first frequency range may be predefined in a protocol or may be notified by a network device to the terminal device. The first frequency range is between 1457 MHz and 1492 MHz. For example, the protocol may specify that a center frequency of a band n50 or a random access occasion of a cell corresponding to the band n50 is 1480 MHz. This embodiment may be applied to an operating band of the band n50, an operating frequency range of the band n50 is 1432 MHz to 1517 MHz, and an uplink channel bandwidth of the terminal device is 60 MHz. As shown in FIG. 13, within the operating frequency range of 1432 MHz to 1517 MHz, a frequency range is obtained by extending upward by the bandwidth of 60 MHz from 1432 MHz, and a frequency range is obtained by extending downward by the bandwidth of 60 MHz to 1517 MHz. An overlapping frequency range of the two frequency ranges is 1457 MHz to 1492 MHz. An uplink channel frequency of the terminal device definitely falls within the overlapping area of two frequency ranges. Therefore, the first frequency range is set between 1457 MHz and 1492 MHz, and the frequency domain position of the random access occasion should be set within the first frequency range, to ensure that the frequency domain position of the random access occasion is within the uplink channel bandwidth.

The frequency domain position of the random access occasion may be any one of the following: a frequency domain starting position of the random access occasion, a frequency domain ending position of the random access occasion, or a center frequency of the random access occasion.

The embodiment in FIG. 12 may be applicable to a TDD communication scenario in which an uplink channel bandwidth and a downlink channel bandwidth of a cell are not equal. Before S1201, the terminal device may further determine that an uplink channel bandwidth of a cell is not equal to a downlink channel bandwidth of the cell.

In the embodiment in FIG. 12, although the uplink channel bandwidth and the downlink channel bandwidth of the cell are not equal, in the TDD mode, an uplink and a downlink need not overlap in time domain. Based on this, the random access occasion occupies last Y symbols of a half-frame in which an SSB is located, and Y is a positive integer. For a solution in which the random access occasion occupies the last Y symbols of the half-frame in which the SSB is located, refer to the description in Manner 2. Details are not described herein again.

When Manner 3 is applied to an FDD duplex mode scenario, the FDD satisfies Feature 2 and Feature 2-1, that is, for the band whose duplex mode is the FDD in the FR 1, the center frequencies of the uplink carrier and the downlink carrier of the cell deployed on the band are not aligned, and the bandwidths of the uplink carrier and the downlink carrier are symmetric. When the bandwidths of the uplink carrier and the downlink carrier are symmetric, the frequency domain position of the random access occasion may be determined by using Manner 3.

However, for a specific band, for example, a band n66/70/71/91/92/93/94, bandwidths of an uplink carrier and a downlink carrier of the band n66/70/71/91/92/93/94 may alternatively be asymmetric. Based on the scenario, an embodiment of this application further provides a random access method. As shown in FIG. 14, procedures of the random access method are described as follows:

S1401: A terminal device determines a frequency domain position of a random access occasion based on a frequency of an uplink carrier of a cell and an offset value. The offset value may be denoted as a first offset value.

The frequency domain position of the random access occasion may be a frequency domain starting position of the random access occasion, a frequency domain ending position of the random access occasion, or a center frequency of the random access occasion.

S1402: The terminal device initiates random access based on the random access occasion.

In the embodiment in FIG. 14, the frequency of the uplink carrier may be a lowest frequency of the uplink carrier, a center frequency of the uplink carrier, or a highest frequency of the uplink carrier. If the terminal device worked on a carrier or a cell of the specific band, the terminal device may determine information of the uplink carrier and a downlink carrier based on prior information. In this way, the terminal device may determine the frequency of the uplink carrier of the cell based on the prior information.

If the frequency of the uplink carrier is the lowest frequency of the uplink carrier, the frequency domain position of the random access occasion may be a sum of the lowest frequency of the uplink carrier and the first offset value, that is, a frequency at which the lowest frequency of the uplink carrier is offset upward by the first offset value.

If the frequency of the uplink carrier is the center frequency of the uplink carrier, the frequency domain position of the random access occasion may be a sum of the center frequency of the uplink carrier and the first offset value. In this case, the first offset value may be positive or negative. When the first offset value is positive, the frequency domain position of the random access occasion is a frequency at which the center frequency of the uplink carrier is offset upward by the first offset value, or when the first offset value is negative, the frequency domain position of the random access occasion is a frequency at which the center frequency of the uplink carrier is offset downward by the first offset value. Alternatively, if the first offset value is always a positive value, the frequency domain position of the random access occasion may be the sum of the center frequency of the uplink carrier and the first offset value, or the frequency domain position of the random access occasion may be a difference between the center frequency of the uplink carrier and the first offset value.

Similarly, if the frequency of the uplink carrier is the highest frequency of the uplink carrier, the frequency domain position of the random access occasion may be a sum of the highest frequency of the uplink carrier and the first offset value. In this case, the first offset value may be positive or negative. When the first offset value is positive, the frequency domain position of the random access occasion is a frequency at which the highest frequency of the uplink carrier is offset upward by the first offset value, or when the first offset value is negative, the frequency domain position of the random access occasion is a frequency at which the highest frequency of the uplink carrier is offset downward by the first offset value. Alternatively, if the first offset value is always a positive value, the frequency domain position of the random access occasion may be the sum of the highest frequency of the uplink carrier and the first offset value, or the frequency domain position of the random access occasion may be a difference between the highest frequency of the uplink carrier and the first offset value.

Certainly, for different cases of the frequency of the uplink carrier, the first offset value may be the same or may be different.

The first offset value may be a fixed value or may be separately configured based on different bandwidths of different SCSs. For example, when the SCS = 15 kHz, and uplink and downlink channel bandwidths are respectively 5 MHz and 20 MHz, the first offset value = a value 1. When the SCS = 15 kHz, and uplink and downlink channel bandwidths are respectively 10 MHz and 40 MHz, the first offset value = a value 2.

The value of the first offset value needs to be specified in consideration of a guard bandwidth.

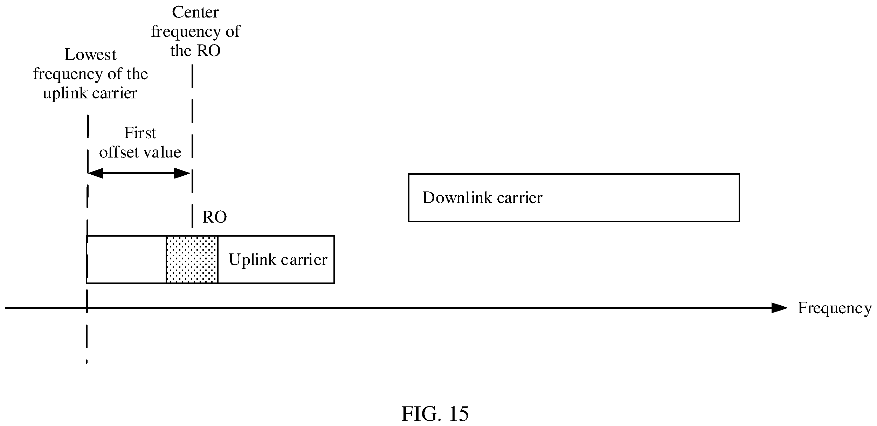

As shown in FIG. 15, an example in which the center frequency of the random access occasion is determined based on the lowest frequency of the uplink carrier of the cell and the first offset value.

The embodiment in FIG. 12 and the embodiment in FIG. 14 respectively describe two manners for determining the frequency domain position of the random access occasion. The foregoing describes how to determine the random access occasion. The manners for determining the frequency domain position of the random access occasion in the embodiment in FIG. 12 and the embodiment in FIG. 14 may also be combined with the method for determining the random access occasion. In other words, the methods in the embodiment in FIG. 12 and the embodiment in FIG. 14 are used to determine the frequency domain position of the random access occasion and determine the frequency domain resource of the random access occasion. The time domain resource of the random access occasion is determined by using the method, to determine the random access occasion.

The following describes possible implementations in which the terminal device initiates the random access based on the random access occasion in the embodiments in FIG. 6, FIG. 12, and FIG. 14.

The terminal device sends the random access preamble to the network device based on the time domain resource and the frequency domain resource of the random access occasion, which may correspond to the message 3 or the message A in the random access process.

After receiving the random access preamble, the network device sends the RAR to the terminal device. The terminal device receives the RAR of the network device. When receiving the RAR, the terminal device needs to monitor a physical downlink control channel (physical downlink control channel, PDCCH) in the RAR window, and the PDCCH may carry scheduling information of the RAR.

The RAR window may be indicated in the SIB 1. When the terminal device cannot correctly receive the SIB 1, a manner of determining the RAR window may be defined in this embodiment of this application. Optionally, a start point of the RAR window may be predefined in a protocol. For example, the start point of the RAR window is a P^{th} symbol after a last symbol of the time domain resource of the random access occasion, and P is an integer greater than or equal to 0. A length of the RAR window may also be predefined in the protocol. For example, the length of the RAR window is defined as eight slots.

The frequency domain of the RAR may be CORESET#0, that is, the terminal device monitors the PDCCH of the RAR on the CORESET#0.

The receiving of the RAR by the terminal device may correspond to the message 4 in the four-step random access process. The RAR may indicate an uplink resource grant (UL grant) of the message 3. The terminal device sends the message 3 to the network device based on the uplink resource grant in the RAR.

The uplink resource grant of the message 3 may be indicated based on an initial BWP. The initial BWP may be indicated in the SIB 1. When the terminal device cannot correctly receive the SIB 1, a manner of determining the uplink resource grant of the message 3 in the RAR may be provided in this embodiment of this application.

In a possible design, the uplink resource grant includes an offset value, which is denoted as a second offset value. The second offset value is used to determine a frequency domain starting position of the uplink resource of the message 3. The second offset value may be an offset value that is of the uplink resource of the message 3 and that is relative to the frequency domain position of the random access occasion. Alternatively, the second offset value may be an offset value that is of the uplink resource of the message 3 and that is relative to the frequency domain position of the SSB. The frequency domain position of the random access occasion and the frequency domain position of the SSB may be determined according to the manners in the embodiment in FIG. 6, the embodiment in FIG. 12, and the embodiment in FIG. 14.

The uplink resource grant further includes a quantity of frequency domain units occupied by the uplink resource of the message 3. For example, the uplink resource grant includes or indicates a quantity of RBs occupied by the uplink resource of the message 3.

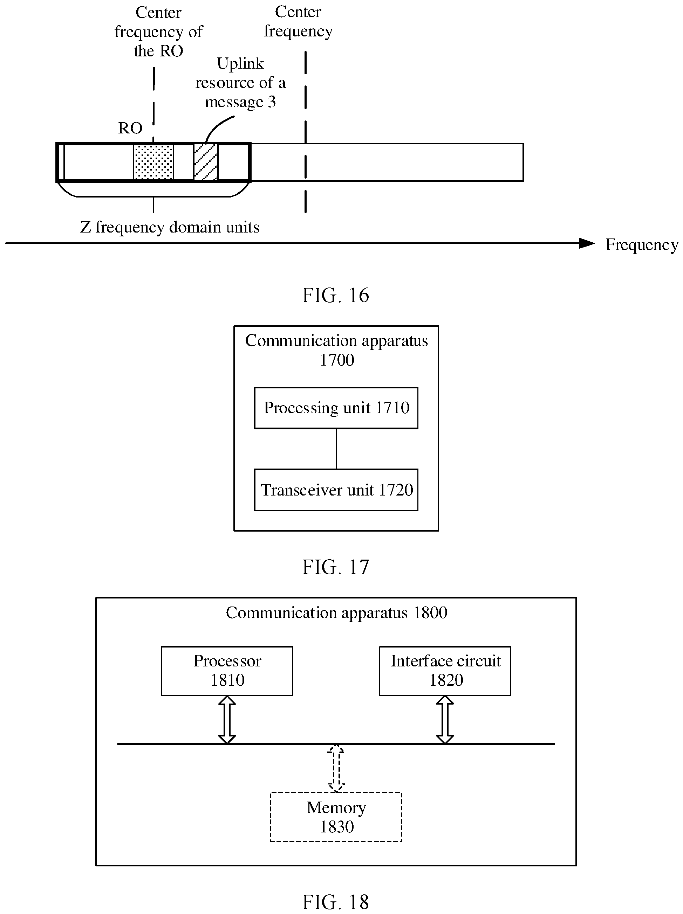

In another possible design, the uplink resource grant indicates the uplink resource of the message 3 in the bandwidth part, and the bandwidth part is determined based on the frequency domain position of the random access occasion. For example, as shown in FIG. 16, the bandwidth part is Z frequency domain units centered on the center frequency of the random access occasion, and Z is a positive integer. For the method for determining the center frequency of the random access occasion, refer to the descriptions in the embodiment in FIG. 6, the embodiment in FIG. 12, and the embodiment in FIG. 14. When indicating the uplink resource of the message 3 in the bandwidth part, the network device needs to ensure that the uplink resource of the message 3 is on the uplink carrier.

In this embodiment of this application, another configuration parameter required by the terminal device in the random access process may also be predefined in the protocol, and the terminal device can determine the another configuration parameter in the random access process without receiving and decoding the SIB 1. The another configuration parameter may be, for example, a root sequence required for generating the preamble or a modulation order used by the terminal device to receive or send a message.

The terminal device performs the random access according to the method provided in this embodiment of this application. After entering a connected state, the terminal device stores the configuration information of the random access occasion of the carrier and may further store the another configuration parameter required in the random access process for subsequent use.

It should be noted that embodiments provided in this application may independently form the solution that needs to be protected in this application or may be combined to form the solution that needs to be protected in this application.

It may be understood that, to implement the functions in the foregoing embodiments, the terminal device includes a corresponding hardware structure and/or a corresponding software module for performing each function. A person skilled in the art should be easily aware that, with reference to units and method steps of the examples described in embodiments disclosed in this application, this application can be implemented by using hardware or a combination of hardware and computer software. Whether a function is performed by hardware or hardware driven by computer software depends on particular application scenarios and design constraints of the technical solutions.

FIG. 17 and FIG. 18 each are a schematic diagram of a possible structure of a communication apparatus according to an embodiment of this application. The communication apparatus may be configured to implement the functions of the terminal device in the foregoing method embodiments, and therefore can also implement beneficial effect of the foregoing method embodiments. In this embodiment of this application, the communication apparatus may be one of the terminals 120a to 120j shown in FIG. 1 or may be a module (for example, a chip) applied to the terminal.

As shown in FIG. 17, a communication apparatus 1700 includes a processing unit 1710 and a transceiver unit 1720. The communication apparatus 1700 is configured to implement the functions of the terminal device in the method embodiments shown in FIG. 6, FIG. 12, or FIG. 14.

When the communication apparatus 1700 is configured to implement the functions of the terminal device in the method embodiment shown in FIG. 6, the transceiver unit 1720 is configured to receive an SSB from a network device; and the processing unit 1710 is configured to: determine a frequency domain position of a random access occasion based on a frequency domain location of the SSB, and initiate random access based on the random access occasion.

When the communication apparatus 1700 is configured to implement the functions of the terminal device in the method embodiment shown in FIG. 12, the processing unit 1710 is configured to: determine a frequency domain position of a random access occasion, and initiate random access based on the random access occasion.

When the communication apparatus 1700 is configured to implement the functions of the terminal device in the method embodiment shown in FIG. 14, the processing unit 1710 is configured to: determine a frequency domain position of a random access occasion based on a frequency of an uplink carrier of a cell and an offset value, and initiate random access based on the random access occasion.

For more detailed descriptions of the processing unit 1710 and the transceiver unit 1720, directly refer to the related descriptions in the method embodiments shown in FIG. 6, FIG. 12, and FIG. 14, and details are not described herein again.

As shown in FIG. 18, a communication apparatus 1800 includes a processor 1810 and an interface circuit 1820. The processor 1810 and the interface circuit 1820 are coupled to each other. It may be understood that the interface circuit 1820 may be a transceiver or an input/output interface. Optionally, the communication apparatus 1800 may further include a memory 1830, configured to store instructions executed by the processor 1810, store input data required by the processor 1810 to run the instructions, or store data generated after the processor 1810 runs the instructions.

When the communication apparatus 1800 is configured to implement the methods shown in FIG. 6, FIG. 12, and FIG. 14, the processor 1810 is configured to implement the functions of the processing unit 1710, and the interface circuit 1820 is configured to implement the functions of the transceiver unit 1720.

When the communication apparatus is the chip applied to the terminal device, the chip in the terminal device implements the functions of the terminal device in the foregoing method embodiments. The chip in the terminal device receives information from another module (for example, a radio frequency module or an antenna) in the terminal device, where the information is sent by a network device to the terminal device. Alternatively, the chip in the terminal device sends information to another module (for example, a radio frequency module or an antenna) in the terminal device, where the information is sent by the terminal device to a network device.

When the communication apparatus is a module applied to a network device, the module in the network device implements the functions of the network device in the foregoing method embodiments. The module in the network device receives information from another module (for example, a radio frequency module or an antenna) in the network device, where the information is sent by the terminal to the network device. Alternatively, the module in the network device sends information to another module (for example, a radio frequency module or an antenna) in the network device, where the information is sent by the network device to the terminal. The module in the network device herein may be a baseband chip of the network device, or may be a DU or another module. The DU herein may be a DU in an open radio access network (open radio access network, O-RAN) architecture.

It may be understood that the processor in embodiments of this application may be a central processing unit (Central Processing Unit, CPU), may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA), another programmable logic device, a transistor logic device, a hardware component, or any combination thereof. The general-purpose processor may be a microprocessor or any conventional processor.

The method steps in embodiments of this application may be implemented by hardware, or may be implemented by a processor executing software instructions. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be located in an ASIC. In addition, the ASIC may be located in a base station or a terminal. Certainly, the processor and the storage medium may exist in a base station or terminal as discrete components.

All or some of the foregoing embodiments may be implemented by using software, hardware, firmware, or any combination thereof. When software is used to implement embodiments, all or some embodiments may be implemented in a form of a computer program product. The computer program product includes one or more computer programs or instructions. When the computer programs or instructions are loaded and executed on a computer, the procedures or the functions described in embodiments of this application are all or partially performed. The computer may be a general-purpose computer, a dedicated computer, a computer network, a network device, user equipment, or another programmable apparatus. The computer programs or the instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by a computer, or a data storage device, such as a server or a data center, integrating one or more usable media. The usable medium may be a magnetic medium, for example, a floppy disk, a hard disk, or a magnetic tape; may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. A term "and/or" describes an association relationship between associated objects and indicates that three relationships may exist. For example, A and/or B may indicate the following three cases: Only A exists, both A and B exist, and only B exists, where A and B may be singular or plural.

It may be understood that various numbers in embodiments of this application are merely used for distinguishing for ease of description and are not used to limit the scope of embodiments of this application. Sequence numbers of the foregoing processes do not mean execution sequences. The execution sequences of the processes should be determined based on functions and internal logic of the processes.

## Claims

1. A random access method, comprising:
receiving, by a terminal device, a synchronization signal and physical broadcast channel block SSB;
determining, by the terminal device, a frequency domain position of a random access occasion based on a frequency domain position of the SSB; and
initiating, by the terminal device, random access based on the random access occasion, wherein the random access occasion comprises a frequency domain resource determined based on the frequency domain position of the random access occasion.

2. The method according to claim 1, wherein a spacing between the frequency domain position of the random access occasion and the frequency domain position of the SSB is a first quantity of frequency domain units; and
the frequency domain position of the random access occasion comprises any one of the following: a frequency domain starting position of the random access occasion, a frequency domain ending position of the random access occasion, or a center frequency of the random access occasion; and the frequency domain position of the SSB comprises any one of the following: a frequency domain starting position of the SSB, a frequency domain ending position of the SSB, or a center frequency of the SSB.

3. The method according to claim 1, wherein a center frequency of the random access occasion is equal to a center frequency of the SSB.

4. The method according to claim 3, wherein the random access occasion is located in last Y symbols of a first half-frame, Y is a positive integer, the first half-frame is a half-frame in which the SSB is located, or the first half-frame is an N^{th} half-frame after a half-frame in which the SSB is located, and N is a positive integer.

5. The method according to any one of claims 2 to 4, wherein a duplex mode of a band on which the SSB is located is time division duplex.

6. The method according to claim 1, wherein a center frequency of the random access occasion is determined based on a center frequency of the SSB and a preset frequency separation.

7. The method according to claim 6, wherein a difference between the center frequency of the random access occasion and the center frequency of the SSB is the preset frequency separation.

8. The method according to claim 6 or 7, wherein a duplex mode of a band on which the SSB is located is frequency division duplex, and an uplink channel bandwidth and a downlink channel bandwidth of the band on which the SSB is located are equal.

9. The method according to any one of claims 1 to 8, wherein the random access occasion comprises a second quantity of frequency domain units in frequency domain.

10. The method according to any one of claims 1 to 9, wherein a subcarrier spacing of the random access occasion is a subcarrier spacing of the SSB, or a subcarrier spacing of the random access occasion is a subcarrier spacing indicated by a master information block MIB corresponding to the SSB.

11. The method according to any one of claims 1 to 10, wherein a time domain periodicity of the random access occasion is determined based on an initial access periodicity of the SSB.

12. The method according to any one of claims 1 to 11, wherein the random access occasion further comprises a time domain resource;
the initiating, by the terminal device, random access based on the random access occasion comprises: sending, by the terminal device, a random access preamble to a network device based on the time domain resource and the frequency domain resource; and
the method further comprises: receiving, by the terminal device, an RAR from the network device based on a random access response RAR window, wherein a start point of the RAR window is a P^{th} symbol after a last symbol of the time domain resource, and P is an integer greater than or equal to 0.

13. The method according to claim 12, wherein the method further comprises:
sending, by the terminal device, a message 3 to the network device based on an uplink resource grant in the RAR, wherein the uplink resource grant comprises an offset value, the offset value is used to determine a frequency domain starting position of an uplink resource of the message 3, and the offset value is an offset value of the uplink resource that is of the message 3 and that is relative to the frequency domain position of the SSB, or the offset value is an offset value of the uplink resource that is of the message 3 and that is relative to the frequency domain position of the random access occasion.

14. The method according to claim 13, wherein the uplink resource grant further comprises a quantity of frequency domain units occupied by the uplink resource of the message 3.

15. The method according to claim 12, wherein the method further comprises:
sending, by the terminal device, a message 3 to the network device based on an uplink resource grant in the RAR, wherein the uplink resource grant indicates an uplink resource of the message 3 in a bandwidth part, and the bandwidth part is determined based on the frequency domain position of the random access occasion.

16. The method according to claim 15, wherein the bandwidth part is Z frequency domain units centered on the center frequency of the random access occasion, and Z is a positive integer.

17. A random access method, comprising:
determining, by a terminal device, a frequency domain position of a random access occasion, wherein the frequency domain position of the random access occasion is within a first frequency range, a starting position of the first frequency range is 1457 megahertz MHz, and an ending position of the first frequency range is 1492 MHz; and
initiating, by the terminal device, random access based on the random access occasion.

18. The method according to claim 17, wherein the method further comprises:
determining, by the terminal device, that an uplink channel bandwidth of a cell is not equal to a downlink channel bandwidth of the cell.

19. The method according to claim 17 or 18, wherein the frequency domain position of the random access occasion comprises any one of the following: a frequency domain starting position of the random access occasion, a frequency domain ending position of the random access occasion, or a center frequency of the random access occasion.

20. The method according to any one of claims 17 to 19, wherein the random access occasion is located in last Y symbols of a half-frame in which a synchronization signal and physical broadcast channel block SSB is located, and Y is a positive integer.

21. The method according to any one of claims 17 to 20, wherein the random access occasion further comprises a time domain resource;
the initiating, by the terminal device, random access based on the random access occasion comprises: sending, by the terminal device, a random access preamble to a network device based on the time domain resource and the frequency domain resource; and
the method further comprises: receiving, by the terminal device, an RAR from the network device based on a random access response RAR window, wherein a start point of the RAR window is a P^{th} symbol after a last symbol of the time domain resource, and P is an integer greater than or equal to 0.

22. The method according to claim 21, wherein the method further comprises:
sending, by the terminal device, a message 3 to the network device based on an uplink resource grant in the RAR, wherein the uplink resource grant comprises an offset value, the offset value is used to determine a frequency domain starting position of an uplink resource of the message 3, and the offset value is an offset value of the uplink resource that is of the message 3 and that is relative to a frequency domain position of the SSB, or the offset value is an offset value of the uplink resource that is of the message 3 and that is relative to the frequency domain position of the random access occasion.

23. The method according to claim 22, wherein the uplink resource grant further comprises a quantity of frequency domain units occupied by the uplink resource of the message 3.

24. The method according to claim 22, wherein the method further comprises:
sending, by the terminal device, the message 3 to the network device based on the uplink resource grant in the RAR, wherein the uplink resource grant indicates the uplink resource of the message 3 in a bandwidth part, and the bandwidth part is determined based on the frequency domain position of the random access occasion.

25. The method according to claim 24, wherein the bandwidth part is Z frequency domain units centered on the center frequency of the random access occasion, and Z is a positive integer.

26. A random access method, comprising:
determining, by a terminal device, a frequency domain position of a random access occasion based on a frequency of an uplink carrier of a cell and a first offset value; and
initiating, by the terminal device, random access based on the random access occasion.

27. The method according to claim 26, wherein the frequency domain position of the random access occasion comprises any one of the following: a frequency domain starting position of the random access occasion, a frequency domain ending position of the random access occasion, or a center frequency of the random access occasion, and the frequency of the uplink carrier comprises any one of the following: a lowest frequency, a center frequency, or a highest frequency of the uplink carrier.

28. The method according to claim 26 or 27, wherein the center frequency of the random access occasion is a sum of the frequency of the uplink carrier and the first offset value.

29. The method according to any one of claims 26 to 28, wherein an uplink channel bandwidth and a downlink channel bandwidth of the cell in which the random access is initiated are not equal.

30. The method according to any one of claims 26 to 29, wherein the random access occasion further comprises a time domain resource;
the initiating, by the terminal device, random access based on the random access occasion comprises: sending, by the terminal device, a random access preamble to a network device based on the time domain resource and the frequency domain resource; and
the method further comprises: receiving, by the terminal device, an RAR from the network device based on a random access response RAR window, wherein a start point of the RAR window is a P^{th} symbol after a last symbol of the time domain resource, and P is an integer greater than or equal to 0.

31. The method according to claim 30, wherein the method further comprises:
sending, by the terminal device, a message 3 to the network device based on an uplink resource grant in the RAR, wherein the uplink resource grant comprises an offset value, the offset value is used to determine a frequency domain starting position of an uplink resource of the message 3, and the offset value is an offset value of the uplink resource that is of the message 3 and that is relative to a frequency domain position of an SSB, or the offset value is an offset value of the uplink resource that is of the message 3 and that is relative to the frequency domain position of the random access occasion.

32. The method according to claim 31, wherein the uplink resource grant further comprises a quantity of frequency domain units occupied by the uplink resource of the message 3.

33. The method according to claim 31, wherein the method further comprises:
sending, by the terminal device, the message 3 to the network device based on the uplink resource grant in the RAR, wherein the uplink resource grant indicates the uplink resource of the message 3 in a bandwidth part, and the bandwidth part is determined based on the frequency domain position of the random access occasion.

34. The method according to claim 33, wherein the bandwidth part is Z frequency domain units centered on the center frequency of the random access occasion, and Z is a positive integer.

35. A communication apparatus, comprising:
a communication module, configured to receive a synchronization signal and physical broadcast channel block SSB; and
a processing module, configured to: determine a frequency domain position of a random access occasion based on a frequency domain position the SSB; and initiate random access based on the random access occasion, wherein the random access occasion comprises a frequency domain resource determined based on the frequency domain position of the random access occasion.

36. The apparatus according to claim 35, wherein a spacing between the frequency domain position of the random access occasion and the frequency domain position of the SSB is a first quantity of frequency domain units; and
the frequency domain position of the random access occasion comprises any one of the following: a frequency domain starting position of the random access occasion, a frequency domain ending position of the random access occasion, or a center frequency of the random access occasion; and the frequency domain position of the SSB comprises any one of the following: a frequency domain starting position of the SSB, a frequency domain ending position of the SSB, or a center frequency of the SSB.

37. The apparatus according to claim 35, wherein a center frequency of the random access occasion is equal to a center frequency of the SSB.

38. The apparatus according to claim 35, wherein the random access occasion is located in last Y symbols of a first half-frame, Y is a positive integer, the first half-frame is a half-frame in which the SSB is located, or the first half-frame is an N^{th} half-frame after a half-frame in which the SSB is located, and N is a positive integer.

39. The apparatus according to any one of claims 36 to 38, wherein a duplex mode of a band on which the SSB is located is time division duplex.

40. The apparatus according to claim 35, wherein a center frequency of the random access occasion is determined based on a center frequency of the SSB and a preset frequency separation.

41. The apparatus according to claim 40, wherein a difference between the center frequency of the random access occasion and the center frequency of the SSB is the preset frequency separation.

42. The apparatus according to claim 40 or 41, wherein a duplex mode of a band on which the SSB is located is frequency division duplex, and an uplink channel bandwidth and a downlink channel bandwidth of the band on which the SSB is located are equal.

43. The apparatus according to any one of claims 35 to 42, wherein the random access occasion comprises a second quantity of frequency domain units in frequency domain.

44. The apparatus according to any one of claims 35 to 43, wherein a subcarrier spacing of the random access occasion is a subcarrier spacing of the SSB, or a subcarrier spacing of the random access occasion is a subcarrier spacing indicated by a master information block MIB corresponding to the SSB.

45. The apparatus according to any one of claims 35 to 44, wherein a time domain periodicity of the random access occasion is determined based on an initial access periodicity of the SSB.

46. The apparatus according to any one of claims 35 to 45, wherein the random access occasion further comprises a time domain resource;
when initiating the random access based on the random access occasion, the processing module is configured to send a random access preamble to a network device based on the time domain resource and the frequency domain resource; and
the processing module is further configured to receive an RAR from the network device based on a random access response RAR window, wherein a start point of the RAR window is a P^{th} symbol after a last symbol of the time domain resource, and P is an integer greater than or equal to 0.

47. The apparatus according to claim 46, wherein the processing module is further configured to:
send a message 3 to the network device based on an uplink resource grant in the RAR, wherein the uplink resource grant comprises an offset value, the offset value is used to determine a frequency domain starting position of an uplink resource of the message 3, and the offset value is an offset value of the uplink resource that is of the message 3 and that is relative to the frequency domain position of the SSB, or the offset value is an offset value of the uplink resource that is of the message 3 and that is relative to the frequency domain position of the random access occasion.

48. The apparatus according to claim 47, wherein the uplink resource grant further comprises a quantity of frequency domain units occupied by the uplink resource of the message 3.

49. The apparatus according to claim 46, wherein the processing module is further configured to:
send a message 3 to the network device based on an uplink resource grant in the RAR, wherein the uplink resource grant indicates an uplink resource of the message 3 in a bandwidth part, and the bandwidth part is determined based on the frequency domain position of the random access occasion.

50. The apparatus according to claim 49, wherein the bandwidth part is Z frequency domain units centered on the center frequency of the random access occasion, and Z is a positive integer.

51. A communication apparatus, comprising:
a processing module, configured to determine a frequency domain position of a random access occasion, wherein the frequency domain position of the random access occasion is within a first frequency range, a starting position of the first frequency range is 1457 megahertz MHz, and an ending position of the first frequency range is 1492 MHz; and configured to initiate random access based on the random access occasion.

52. The apparatus according to claim 51, wherein the processing module is further configured to:
determine that an uplink channel bandwidth of a cell is not equal to a downlink channel bandwidth of the cell.

53. The apparatus according to claim 51 or 52, wherein the frequency domain position of the random access occasion comprises any one of the following: a frequency domain starting position of the random access occasion, a frequency domain ending position of the random access occasion, or a center frequency of the random access occasion.

54. The apparatus according to any one of claims 51 to 53, wherein the random access occasion is located in last Y symbols of a half-frame in which a synchronization signal and physical broadcast channel block SSB is located, and Y is a positive integer.

55. The apparatus according to any one of claims 51 to 54, wherein the random access occasion further comprises a time domain resource;
the processing module is specifically configured to:
send a random access preamble to a network device based on the time domain resource and the frequency domain resource; and
the processing module is further configured to:
receive an RAR from the network device based on a random access response RAR window, wherein a start point of the RAR window is a P^{th} symbol after a last symbol of the time domain resource, and P is an integer greater than or equal to 0.

56. The apparatus according to claim 55, wherein the processing module is further configured to:
send a message 3 to the network device based on an uplink resource grant in the RAR, wherein the uplink resource grant comprises an offset value, the offset value is used to determine a frequency domain starting position of an uplink resource of the message 3, and the offset value is an offset value of the uplink resource that is of the message 3 and that is relative to a frequency domain position of the SSB, or the offset value is an offset value of the uplink resource that is of the message 3 and that is relative to the frequency domain position of the random access occasion.

57. The apparatus according to claim 56, wherein the uplink resource grant further comprises a quantity of frequency domain units occupied by the uplink resource of the message 3.

58. The apparatus according to claim 56, wherein the processing module is further configured to:
send the message 3 to the network device based on the uplink resource grant in the RAR, wherein the uplink resource grant indicates the uplink resource of the message 3 in a bandwidth part, and the bandwidth part is determined based on the frequency domain position of the random access occasion.

59. The apparatus according to claim 58, wherein the bandwidth part is Z frequency domain units centered on the center frequency of the random access occasion, and Z is a positive integer.

60. A communication apparatus, comprising:
a processing module, configured to: determine a frequency domain position of a random access occasion based on a frequency of an uplink carrier of a cell and a first offset value; and initiate random access based on the random access occasion.

61. The apparatus according to claim 60, wherein the frequency domain position of the random access occasion comprises any one of the following: a frequency domain starting position of the random access occasion, a frequency domain ending position of the random access occasion, or a center frequency of the random access occasion, and the frequency of the uplink carrier comprises any one of the following: a lowest frequency, a center frequency, or a highest frequency of the uplink carrier.

62. The apparatus according to claim 60 or 61, wherein the center frequency of the random access occasion is a sum of the frequency of the uplink carrier and the first offset value.

63. The apparatus according to any one of claims 60 to 62, wherein an uplink channel bandwidth and a downlink channel bandwidth of the cell in which the random access is initiated are not equal.

64. The apparatus according to any one of claims 60 to 63, wherein the random access occasion further comprises a time domain resource;
the processing module is specifically configured to send a random access preamble to a network device based on the time domain resource and the frequency domain resource; and
the processing module is further configured to receive an RAR from the network device based on a random access response RAR window, wherein a start point of the RAR window is a P^{th} symbol after a last symbol of the time domain resource, and P is an integer greater than or equal to 0.

65. The apparatus according to claim 64, wherein the processing module is further configured to:
send a message 3 to the network device based on an uplink resource grant in the RAR, wherein the uplink resource grant comprises an offset value, the offset value is used to determine a frequency domain starting position of an uplink resource of the message 3, and the offset value is an offset value of the uplink resource that is of the message 3 and that is relative to a frequency domain position of an SSB, or the offset value is an offset value of the uplink resource that is of the message 3 and that is relative to the frequency domain position of the random access occasion.

66. The apparatus according to claim 65, wherein the uplink resource grant further comprises a quantity of frequency domain units occupied by the uplink resource of the message 3.

67. The apparatus according to claim 65, wherein the processing module is further configured to:
send the message 3 to the network device based on the uplink resource grant in the RAR, wherein the uplink resource grant indicates the uplink resource of the message 3 in a bandwidth part, and the bandwidth part is determined based on the frequency domain position of the random access occasion.

68. The apparatus according to claim 67, wherein the bandwidth part is Z frequency domain units centered on the center frequency of the random access occasion, and Z is a positive integer.

69. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, and the processor is configured to implement, by using a logic circuit or by executing code instructions, the method according to any one of claims 1 to 16, the method according to any one of claims 17 to 25, or the method according to any one of claims 26 to 34.

70. A computer-readable storage medium, wherein the storage medium stores a computer program or instructions, and when the computer program or the instructions are executed by a communication apparatus, the method according to any one of claims 1 to 16 is implemented, the method according to any one of claims 17 to 25 is implemented, or the method according to any one of claims 26 to 34 is implemented.

71. A computer program product, wherein the computer program product comprises computer program code, and when the computer program code is run, the method according to any one of claims 1 to 16 is implemented, the method according to any one of claims 17 to 25 is implemented, or the method according to any one of claims 26 to 34 is implemented.

72. A communication system, comprising a terminal device and a network device, the network device is configured to communicate with the terminal device, and the terminal device is configured to implement the method according to any one of claims 1 to 16, implement the method according to any one of claims 17 to 25, or implement the method according to any one of claims 26 to 34.

73. A chip system, comprising a processor, wherein the processor is configured to execute program instructions or code stored in a memory, to implement the method according to any one of claims 1 to 16, implement the method according to any one of claims 17 to 25, or implement the method according to any one of claims 26 to 34.
